(19) Europäisches Patentamt

European Patent Office

Office européen des brevets

(11) EP 0 789 328 B1

(12) EUROPÄISCHE PATENTSCHRIFT

(45) Veröffentlichungstag und Bekanntmachung des Hinweises auf die Patenterteilung:
22.05.2002 Patentblatt 2002/21

(51) Int Cl.⁷: $G06T\ 15/10$, $G06T\ 15/50$

(21) Anmeldenummer: 97250030.0

(22) Anmeldetag: 10.02.1997

(54) **Bildverarbeitungsverfahren zur Darstellung von spiegelnden Objekten und zugehörige Vorrichtung**

Picture processing method for displaying reflective objects and device therefor

Méthode de traitement d'image pour affichage d'objets réfléchissants et dispositif correspondant

(84) Benannte Vertragsstaaten:
AT BE CH DE FR GB IT LI NL

(30) Priorität: 12.02.1996 DE 19606357

(43) Veröffentlichungstag der Anmeldung:
13.08.1997 Patentblatt 1997/33

(73) Patentinhaber: GMD - FORSCHUNGSZENTRUM INFORMATIONSTECHNIK GMBH
D-53757 Sankt Augustin (DE)

(72) Erfinder: Wittig, Oliver, Dipl.-Inform.
10555 Berlin (DE)

(74) Vertreter: Christiansen, Henning, Dipl.-Ing.
Patentanwalt
Pacelliallee 43/45
14195 Berlin (DE)

(56) Entgegenhaltungen:
- GREENE N: "ENVIRONMENT MAPPING AND OTHER APPLICATIONS OF WORLD PROJECTIONS" IEEE COMPUTER GRAPHICS AND APPLICATIONS, NEW YORK, NY, US, Bd. 6, Nr. 11, November 1986, Seiten 21-29, XP000002234
- "PAINTING ENVIRONMENT MAPS THROUGH REVERSE RAY-TRACING" IBM TECHNICAL DISCLOSURE BULLETIN, Bd. 34, Nr. 4B, 1.September 1991, Seiten 436-437, XP000189617
- Ernst, Jackèl, Rüsseler, Wittig: "Hardware Supported Bump Mapping: A step towards Higher Quality Real-Time Rendering", 10th Eurographics Workshp on Graphics Hardware, Maastricht, Netherlands, 1995, Seiten 63-70

**Beschreibung**

Die Erfindung betrifft ein Bildverarbeitungsverfahren zur Darstellung von Objekten mit spiegelnden Oberflächen gemäß dem Oberbegriff des Anspruchs 1 sowie eine Vorrichtung zur Durchführung des Verfahrens gemäß Anspruch 9.

In Computer-Grafiksystemen werden Körper in der Regel durch Gittermodelle nachgebildet, die durch die Raumkoordinaten der Knotenpunkte beschrieben werden. Zur Darstellung der zwischen den Knotenpunkten liegenden Polygonflächen auf einem Bildschirm werden die Raumkoordinaten der Knotenpunkte dann aus dem 3-dimensionalen Koordinatensystem beispielsweise durch Zentralprojektion in ein 2-dimensionales Bildschirm-Koordinatensystem umgerechnet.

Ein derartiges Bildverarbeitungsverfahren ist aus ERNST, JACKÈL, RÜSSELER, WITTIG: "Hardware Supported Bump Mapping: A Step towards Higher Quality Real-Time Rendering", 10th Eurographics Workshop on Graphics Hardware, Maastricht, Netherlands, 1995, 63-70 bekannt. Hierbei wird der Helligkeits- und Farbeindruck der einzelnen zwischen den Knotenpunkten des Gittermodells liegenden Polygonflächen jeweils getrennt unter Berücksichtigung sowohl der Lichteinfallsrichtung als auch der Blickrichtung des Betrachters entsprechend einem lokalen Beleuchtungsmodell berechnet. Hierbei kann sowohl diffuse Reflexion als auch Spiegelreflexion an der Polygonoberfläche berücksichtigt werden.

Beim Betrachten einer ideal spiegelnden Oberfläche sieht der Betrachter nicht die Polygonfläche selbst, sondern die in der Polygonfläche gespiegelte Umgebung des darzustellenden Objekts. Bei dem vorbekannten Bildverarbeitungsverfahren wird deshalb zur Berechnung des aufgrund von Spiegelreflexionen an der Polygonfläche entstehenden Helligkeitsund Farbeindrucks der Schnittpunkt eines vom Betrachter ausgehenden und an der Polygonfläche reflektierten "Sehstrahls" mit einer die darzustellende räumliche Szene umgebenden kubischen Hüllfläche ermittelt. Jedem Flächenelement der Hüllfläche ist hierbei ein Helligkeits- und Farbwert zugeordnet, so daß die Hüllfläche eine Rundumaufnahme der Umgebung aus der Perspektive des darzustellenden Objekts enthält. Zur Berechnung des Helligkeits- und Farbeindrucks einer Polygonfläche des Gittermodells ist also lediglich der Schnittpunkt des an der Polygonfläche reflektierten "Sehstrahls" mit der kubischen Hüllfläche zu berechnen und anschließend der diesem Schnittpunkt zugeordnete Helligkeits- und Farbwert zu ermitteln. Die kubische Hüllfläche wird hierbei durch eine Speichermatrix nachgebildet, die zur Bestimmung des Schnittpunkts von "Sehstrahl" und Hüllfläche durch die Komponenten des in Vektorform vorliegenden "Sehstrahls" adressiert wird und in jedem Speicherplatz den Helligkeits- und Farbwert eines Raumwinkelausschnitts der Umgebung des darzustellenden Objekts enthält.

Die Bestimmung des aufgrund von Spiegelreflexion an der Polygonfläche auftretenden Helligkeits- und Farbwerts erfordert somit lediglich einige Vektoroperationen zur Berechnung des Schnittpunkts von "Sehstrahl" und Hüllfläche sowie einen Speicherzugriff auf die Speichermatrix, welche die Hüllfläche nachbildet. Das vorbekannte Bildverarbeitungsverfahren ermöglicht deshalb eine relativ schnelle Berechnung des Bildeindrucks, was insbesondere bei einer Echt-Zeit-Wiedergabe von Bewegungsdarstellungen wichtig ist.

Ein Nachteil des vorbekannten Bildverarbeitungsverfahrens ist jedoch darin zu sehen, daß nur Spiegelungen der "globalen" Umgebung in den Objekten darstellbar sind, nicht jedoch Spiegelungen der Objekte untereinander ("Interreflections"). Auch ist es mit dem vorbekannten Bildverarbeitungsverfahren nicht möglich, Mehrfachspiegelungen der Objekte untereinander wiederzugeben.

Der Erfindung liegt somit die Aufgabe zugrunde, ein Bildverarbeitungsverfahren der eingangs genannten Art zu schaffen, das die Darstellung von Spiegelungen der Umgebung in den Objekten sowie von Spiegelungen der Objekte untereinander ermöglicht.

Die Aufgabe wird ausgehend von einem Bildverarbeitungsverfahren gemäß dem Oberbegriff des Anspruchs 1 durch dessen kennzeichnende Merkmale sowie - hinsichtlich der Vorrichtung zur Durchführung des Verfahrens - durch die Merkmale des Anspruchs 9 gelöst.

Die Erfindung schließt die technische Lehre ein, bei der Darstellung einer aus mehreren Objekten mit spiegelnden Oberflächen bestehenden computer-modellierten räumlichen Szene für jedes Objekt eine Speichermatrix vorzusehen, die eine das jeweilige Objekt umgebende Hüllfläche nachbildet und den Inhalt der Speichermatrizen unter Berücksichtigung der gegenseitigen Spiegelungen beispielsweise durch Ray-Tracing-Verfahren vorzuberechnen.

Das erfindungsgemäße Bildverarbeitungsverfahren ermöglicht die Darstellung von räumlichen Szenen mit mehreren Objekten, die in Form eines Gittermodells vorliegen und vorzugsweise durch die Raumkoordinaten der einzelnen Eckpunkte und damit die räumliche Lage der einzelnen Polygonflächen definiert sind.

Der Bildeindruck der einzelnen Polygonflächen kann hierbei unabhängig voneinander berechnet werden, was eine Realisierung des erfindungsgemäßen Bildverarbeitungsverfahrens in einer Parallelrechnerarchitektur und damit eine schnelle Bildberechnung ermöglicht. Dies ist insbesondere - wie bereits vorstehend erwähnt - bei einer Echt-Zeit-Wiedergabe von Bewegungsdarstellungen oder der Simulation von variierenden Lichtverhältnissen vorteilhaft.

Die erfinderischen Maßnahmen lassen sich sowohl mit rein softwaremäßigen Maßnahmen als auch mittels geeigneter spezieller Hardware ausführen. Die hardwaremäßige Lösung hat dabei den Vorteil, daß sich insbesondere

## EP 0 789 328 B1

durch in parallel angeordneten Baugruppen gleichzeitig ausgeführte Operationen große Zeitvorteile erzielen lassen.

Wenn daher nachfolgend von "Baugruppen" die Rede ist, kann es sich dabei auch um Funktionsgruppen, beispielsweise in Form von elektrischen Schaltungen, handeln. Hierbei ist auch eingeschlossen, daß ein und dieselbe Bau- oder Funktionsgruppe nacheinander unterschiedliche Operationen ausführt, wie es bei der Prozessortechnik allgemein der Fall ist. Geschwindigkeitsvorteile lassen sich aber - wie erläutert - vor allen Dingen dann erzielen, wenn Funktionsgruppen parallel nebeneinander tätig sind.

Die Berechnung des Bildeindrucks erfolgt gemäß der Erfindung durch eine Recheneinheit, die zur Aufnahme eines die räumliche Lage der darzustellenden Polygonfläche repräsentierenden ersten Parametersatzes eine erste Baugruppe aufweist. Der erste Parametersatz enthält hierzu beispielsweise die Raumkoordinatenwerte der Eckpunkte des darzustellenden Polygons oder die Raumkoordinatenwerte des Flächenschwerpunkts sowie die Komponenten des Normalenvektors der Polygonfläche. Maßgebend für die Zusammensetzung des ersten Parametersatzes ist jedoch lediglich, daß dieser die räumliche Lage der Polygonfläche eindeutig wiedergibt.

Die erste Baugruppe der Recheneinheit berechnet aus dem ersten Parametersatz dann einen die Flächennormale der Polygonfläche repräsentierenden zweiten Parametersatz, um bei der Berechnung des Bildeindrucks der Polygonfläche im Rahmen eines lokalen Beleuchtungsmodells deren Ausrichtung relativ zu den Lichtquellen bzw. dem Betrachter berücksichtigen zu können.

Die räumliche Lage der Flächennormale der Polygonfläche kann aus den Raumkoordinaten der Eckpunkte der Polygonfläche bestimmt werden. Hierzu werden beispielsweise die Kantenvektoren der Polygonfläche berechnet, indem die Raumkoordinaten benachbarter Eckpunkte komponentenweise subtrahiert werden. Die auf diese Weise ermittelten Kantenvektoren liegen naturgemäß in der durch die Polygonfläche definierten Ebene. Die Flächennormale ergibt sich dann als Vektorprodukt zweier Kantenvektoren.

Beim Betrachten einer ideal spiegelnden Oberfläche sieht der Betrachter - wie bereits vorstehend erwähnt - nicht die betrachtete Polygonfläche selbst, sondern die Umgebung, die sich darin spiegelt. Das aus die Polygonfläche auftreffende Licht wird dabei nach den Gesetzen der geometrischen Strahlenoptik reflektiert, wobei Einfallswinkel und Ausfallswinkel gleich sind. Betrachtet man nun nicht den von einer Lichtquelle ausgehenden Lichtstrahl, sondern umgekehrt einen vom Betrachter ausgehenden "Sehstrahl", so wird dieser "Sehstrahl" an der Polygonfläche in Richtung eines Reflexionsvektors reflektiert. Die räumliche Lage dieses Reflexionsvektors ergibt sich aus den Gesetzen der geometrischen Strahlenoptik aus der Gleichheit von Einfallswinkel und Ausfallswinkel. Maßgebend für den Bildeindruck bei der Betrachtung einer spiegelnden Oberfläche ist somit der Schnittpunkt des Reflexionsvektors mit einem anderen Objekt der räumlichen Szene oder dem Hintergrund. Die Recheneinheit weist deshalb gemäß der Erfindung eine zweite Baugruppe auf, um einen die räumliche Lage des Reflexionsvektors repräsentierenden vierten Parametersatz aus dem die räumliche Lage des Normalenvektors der Polygonfläche repräsentierenden zweiten Parametersatz sowie einem die Perspektive des Betrachters repräsentierenden dritten Parametersatz zu berechnen. Der dritte Parametersatz enthält hierbei vorzugsweise die Raumkoordinatenwerte eines virtuellen Betrachterstandorts oder die Komponenten eines die Blickrichtung wiedergebenden Vektors. Durch Variation dieser Raumkoordinatenwerte ist es in einfacher Weise möglich, die Perspektive zu ändern und durch die räumliche Szene hindurchzuwandern.

Maßgebend für den Bildeindruck einer spiegelnden Oberfläche ist - wie bereits vorstehend erwähnt - der Schnittpunkt des Reflexionsvektors mit der Umgebung oder einem anderen Objekt. Die Bestimmung dieses Schnittpunkts ist jedoch insbesondere bei räumlichen Szenen mit großer Ausdehnung relativ schwierig. Das erfindungsgemäße Bildverarbeitungsverfahren sieht deshalb vor, jedes Objekt der räumlichen Szene mit einer vorzugsweise kubischen Hüllfläche zu umgeben und den Schnittpunkt des Reflexionsvektors mit dieser Hüllfläche zu ermitteln. Jedem Flächenelement der Hüllfläche ist hierbei ein Helligkeits- bzw. Farbwert zugeordnet, wobei die Verteilung der Helligkeits- bzw. Farbwerte auf der Hüllfläche durch eine Abbildung der Umgebung des Objekts auf die Hüllfläche vorberechnet wird. Dies kann beispielsweise durch eine Zentralprojektion der Umgebung auf die Hüllfläche erfolgen, die somit eine Rundumaufnahme der Umgebung des jeweiligen Objekts wiedergibt. Zur Berechnung des Bildeindrucks der Polygonfläche wird deshalb gemäß der Erfindung der Schnittpunkt des Reflexionsvektors mit der Hüllfläche berechnet und der diesem Punkt der Hüllfläche zugeordnete Helligkeits- bzw. Farbwert ermittelt.

Die Hüllfläche ist hierbei durch eine Speichermatrix nachgebildet, wobei jeder Speicherplatz der Speichermatrix einem Flächenelement der Hüllfläche entspricht. Die Berechnung des Schnittpunkts von Reflexionsvektor und Hüllfläche sowie die Ermittlung des zugehörigen Helligkeits- bzw. Farbwerts erfolgt gemäß der Erfindung vorzugsweise durch eine Adressierungseinheit, die aus den Komponenten des Reflexionsvektors die Adreßwerte berechnet, die erforderlich sind, um den Speicherplatz der Speichermatrix zu adressieren, der dem Schnittpunkt von Reflexionsvektor und Hüllfläche zugeordnet ist.

Die Bestimmung des aufgrund von Spiegelreflexion an der Polygonfläche auftretenden Helligkeits- und Farbwerts erfordert somit lediglich einige Vektoroperationen zur Berechnung des Schnittpunkts von Reflexionsvektor und Hüllfläche sowie einen Speicherzugriff auf die Speichermatrix, welche die Hüllfläche nachbildet. Dies ermöglicht vorteilhaft eine relativ schnelle Berechnung des Bildeindrucks, was insbesondere bei einer Echt-Zeit-Wiedergabe von Bewegungsdarstellungen oder bei der Simulation variierender Lichtverhältnisse wichtig ist.

3

Gemäß der Erfindung sind mehrere derartige Speichermatrizen vorgesehen, die jeweils einem Objekt der darzustellenden räumlichen Szene zugeordnet sind, um die Reflexionen der Objekte untereinander berücksichtigen zu können.

Wichtig ist in diesem Zusammenhang, daß bei der Ermittlung des Bildeindruck einer Polygonfläche diejenige Speichermatrix verwendet wird, die dem jeweiligen Objekt zugeordnet ist. Hierzu ist gemäß der Erfindung eine dritte Baugruppe vorgesehen, die aus dem die räumliche Lage der Polygonfläche repräsentierenden ersten Parametersatz einen Auswahlwert berechnet und in Abhängigkeit von dem Auswahlwert eine Speichermatrix selektiert. In einer einfachen Ausführungsform erfolgt die Berechnung des Auswahlwerts durch Vergleich der Raumkoordinatenwerte der Polygonfläche mit vorgegebenen Grenzwerten, die die räumliche Lage der Seitenflächen der kubischen Hüllfläche wiedergeben.

Wichtig ist hierbei, daß die Speichermatrizen jeweils eine Rundumaufnahme der Umgebung der jeweiligen Objekte enthalten. Die Berechnung der entsprechenden Speicherinhalte ist zwar relativ zeitaufwendig, jedoch nur einmal erforderlich, sofern die Anordnung der Objekte innerhalb der darzustellenden Szene nicht verändert wird. Es ist deshalb sinnvoll, die in den Speichermatrizen abgespeicherten "Umgebungsbilder" vorzuberechnen, um während der eigentlichen Darstellung der räumlichen Szene Rechenzeit zu sparen.

Bei der Berechnung des Inhalts der Speichermatrizen ist es in einfacher Weise möglich, mehrfache Reflexionen der Objekte untereinander zu berücksichtigen. Hierzu wird zunächst in einem ersten Durchlauf für jedes Objekt der Inhalt der zugehörigen Speichermatrix bestimmt, wobei lediglich die einfachen Reflexionen der Objekte untereinander berücksichtigt werden können. Anschließend enthalten die Speichermatrizen dann die Umgebungsbilder der einzelnen Objekte unter Berücksichtigung einfacher gegenseitiger Spiegelungen, so daß in einem weiteren Durchlauf der Inhalt der Speichermatrizen unter Berücksichtigung auch der zweifachen Spiegelungen berechnet werden kann. Durch mehrfache Durchläufe bei der Berechnung der Speichermatrizen können so Spiegelungen in beliebiger Tiefe vorberechnet werden.

In den vorstehend beschriebenen Ausführungsformen des erfindungsgemäßen Bildverarbeitungsverfahrens erfolgt die Berechnung des Bildeindrucks unter Berücksichtigung der Flächennormale der gesamten Polygonfläche, jedoch einheitlich für die gesamte Polygonfläche.

In einer bevorzugten Ausführungsform der Erfindung werden die Polygonflächen dagegen jeweils in eine Vielzahl von Rasterelementen aufgeteilt, was unter anderem eine Berücksichtigung der innerhalb der Polygonfläche variierenden Beleuchtungsverhältnisse ermöglicht. Die erste Baugruppe der Recheneinheit berechnet hierzu aus dem die räumliche Lage der Polygonfläche repräsentierenden ersten Parametersatz eine Vielzahl von Koordinatensätzen, die die Position jeweils eines Rasterelements der Polygonfläche repräsentieren und beispielsweise die Raumkoordinatenwerte der einzelnen Rasterelemente enthalten.

Die Aufteilung der Polygonflächen in Rasterelemente ermöglicht darüber hinaus die Berücksichtigung der bei gekrümmten Polygonflächen innerhalb der Polygonfläche variierenden lokalen Flächennormale. Hierzu werden bei gekrümmten Polygonflächen die lokalen Flächennormalen in den Eckpunkten der Polygonfläche durch den eingangsseitig aufgenommenen Parametersatz vorgegeben. Die lokale Flächennormale an einem beliebigen Punkt der Polygonfläche ergibt sich dann durch Interpolation der Eckpunktnormalen.

Die Vorgabe der Eckpunktnormalen stellt darüber hinaus einen "weichen" Übergang zwischen benachbarten Polygonflächen sicher, da eine Eckpunktnormale jeweils zu mehreren benachbarten Polygonflächen gehört und die Oberfläche an der Verbindungslinie zweier benachbarter Polygonflächen somit glatt ist.

Bei der Interpolation der lokalen Flächennormale der gekrümmten Polygonfläche aus den Eckpunktnormalen muß in Abhängigkeit zum einen von der Position des zu betrachtenden Rasterelements zwischen den Eckpunkten der Polygonflächen und zum anderen von den Eckpunktnormalen ein Normalenvektor ermittelt werden, der eine Zwischenposition darstellt. Betrachtet man eine Interpolation zwischen nur zwei Eckpunktnormalen, also auf einer Verbindungslinie der beiden Eckpunkte, so läßt sich die eine Eckpunktnormale durch eine Verschiebung und eine Rotation auf die andere Eckpunktnormale abbilden. Bei der Interpolation der lokalen Flächennormale besteht das Problem, daß bei einer aus einer Rotation und einer Verschiebung bestehenden Abbildung nicht einfach komponentenweise interpoliert werden kann.

In einer vorteilhaften Variante der Erfindung erfolgt die Interpolation der lokalen Flächennormale deshalb mit Hilfe der sogenannten Quaternionen. Quaternionen sind vierdimensionale Vektoroperatoren, die eine skalare Komponente und drei vektorielle Komponenten aufweisen. Für jede Eckpunktnormale ist eine Quaternion vorgegeben. Die Interpolation einer beliebigen lokalen Flächennormale kann vorteilhafterweise durch komponentenweise Interpolation der Quaternionen erfolgen. Soll beispielsweise die lokale Flächennormale in der Mitte zwischen zwei Eckpunkten berechnet werden und erfolgt die Interpolation lediglich anhand dieser beiden Eckpunkte, so ist zunächst die Quaternion dieser lokalen Flächennormale zu ermitteln, die sich in diesem Fall als Mittelwert der für die beiden Eckpunktnormalen vorgegebenen Quaternionen ergibt. Die lokale Flächennormale ergibt sich dann aus der Verknüpfung der einen Eckpunktnormale mit der berechneten Quaternion.

In den vorstehend beschriebenen Ausführungsformen des erfindungsgemäßen Bildverarbeitungsverfahrens wurden zur Berechnung des Bildeindrucks der Polygonflächen ideal spiegelnde Oberflächen angenommen, so daß die Farbverteilung der Polygonfläche selbst den Bildeindruck nicht beeinflußt, da der Betrachter nicht die Polygonfläche selbst wahrnimmt, sondern die in der Polygonfläche sich spiegelnde Umgebung.

Reale Oberflächen reflektieren einfallendes Licht jedoch nur teilweise spiegelnd und zum anderen Teil diffus, so daß die Farbe- bzw. Helligkeit der Polygonfläche den Bildeindruck wesentlich beeinflußt. Bei einer derartigen nur teilweise spiegelnden Oberfläche setzt sich der Bildeindruck also aus der Farbe bzw. der Helligkeit der Polygonfläche und den Spiegelungen der Umgebung zusammen. In einer bevorzugten Ausführungsform des erfindungsgemäßen Verfahrens ist deshalb vorgesehen, jeder Polygonfläche einen Farb- bzw. Helligkeitswert zuzuordnen und diesen mit dem Bildinformationswert zu mischen, der die Spiegelung der Umgebung in der Polygonfläche wiedergibt. Das Mischungsverhältnis wird hierbei entsprechend dem Verhältnis von Spiegelreflexion und diffuser Reflexion festgelegt, wobei der die Spiegelungen in der Polygonfläche wiedergebende Bildinformationswert mit zunehmendem Anteil der Spiegelreflexion stärker gewichtet wird.

In einer bevorzugten Ausführungsform des erfindungsgemäßen Bildverarbeitungsverfahrens ist vorgesehen, den einzelnen Polygonflächen jeweils ein zweidimensionales Texturbild zu überlagern, das die Oberflächenstruktur natürlicher Oberflächen wiedergibt. Auf diese Weise ist es beispielsweise möglich, die Oberflächenstruktur einer Holzmaserung nachzubilden, ohne das Gittermodell entsprechend verfeinern zu müssen. Hierzu wird jedem Rasterelement der Polygonfläche ein Wert für das Texturbild zugewiesen, der dann - wie bereits vorstehend beschrieben - mit dem Bildinformationswert gemischt wird, der die Spiegelungen der Umgebung wiedergibt. Hierbei ist wichtig, daß der Wert für das Texturbild lediglich von der Lage des Rasterelements innerhalb der Polygonfläche abhängt, nicht jedoch von der räumlichen Lage der Polygonfläche. Andernfalls würde das Texturbild bei einer Bewegung der Polygonfläche innerhalb der Polygonfläche "wandern". Gemäß der Erfindung ist das Texturbild in einer Speichermatrix - im folgenden auch als Texturspeicher bezeichnet - abgelegt, die mittels einer Adressierungseinheit durch den die räumliche Lage der einzelnen Rasterelemente wiedergebenden Koordinatensatz adressiert wird.

In einer anderen weiterbildenden Variante der Erfindung ist vorgesehen, den einzelnen Polygonflächen, die eben oder zumindest glatt sind, eine Tiefenstruktur zu überlagern, um einen realistischen Bildeindruck zu erzeugen und die Simulation von strukturierten Oberflächen zu ermöglichen, ohne die Details der Oberflächenstruktur im Gittermodell nachbilden zu müssen. Voraussetzung hierfür ist - wie bereits bei der Überlagerung eines zwei-dimensionalen Texturbildes - die Aufteilung der einzelnen Polygonflächen in Rasterelemente sowie die Berechnung der lokalen Flächennormale individuell für jedes Rasterelement der Polygonfläche aus der Flächennormale ohne Berücksichtigung der Tiefenstruktur sowie einem Neigungswert, der die Auslenkung der lokalen Flächennormale aufgrund der Tiefenstruktur wiedergibt.

Es ist deshalb eine Speichermatrix - im folgenden auch als Tiefenmatrix bezeichnet - vorgesehen, die für eine vorgegebene Tiefenstruktur die sich aus dem Oberflächenverlauf ergebenden Neigungswerte der lokalen Flächennormale enthält. Jedes Element der Speichermatrix ist also einem Punkt der Tiefenstruktur zugeordnet und enthält den Neigungswert für diesen Punkt der Tiefenstruktur. Als Neigungswert kann beispielsweise der Neigungsvektor abgespeichert sein, also der Vektor, der zu der lokalen Flächennormale der glatten Oberfläche addiert werden muß, um den Eindruck der Tiefenstruktur hervorzurufen. Auch ist es möglich, als Neigungswert eine Rotationsmatrix abzuspeichern, die die Drehung der lokalen Flächennormale definiert. Dies ist besonders vorteilhaft, da durch eine Drehung die Länge der lokalen Flächennormale nicht verändert wird.

Wichtig ist in diesem Zusammenhang, daß in der Tiefenmatrix nicht die Tiefenstruktur selbst als Relief abgespeichert ist, sondern die sich aus dem Oberflächenverlauf ergebende Neigung der lokalen Flächennormale. Die Berechnung der aufgrund der Tiefenstruktur geneigten lokalen Flächennormale kann deshalb vorteilhaft relativ schnell und mit geringem Rechenaufwand erfolgen.

Für jedes Rasterelement wird also aus der Speichermatrix ein Neigungswert ausgelesen, der die durch die Tiefenstruktur verursachte Neigung der lokalen Flächennormale dieses Rasterelements repräsentiert. Die Speichermatrix wird deshalb durch den Koordinatensatz des jeweiligen Rasterelements adressiert.

Wichtig ist in diesem Zusammenhang, daß der Tiefenwert ausschließlich von der Position des Rasterelements innerhalb der Polygonfläche abhängt, nicht jedoch von der globalen Position des Rasterelements oder der räumlichen Lage der Polygonfläche. Dies ist notwendig, da andernfalls die auf der Polygonoberfläche erscheinende Tiefenstruktur bei einer Bewegung des Polygons auf der Oberfläche "wandern" würde.

Bei einer Ausrichtung der durch die Tiefenstruktur verursachten Neigung der Pixelnormale an der Flächennormale der gesamten Polygonfläche kann eine Tiefenstruktur nur auf ebenen Polygonflächen korrekt simuliert werden, da nur bei solchen Polygonflächen die Flächennormale innerhalb der Polygonfläche einheitlich ist. Bei gekrümmten Polygonflächen variiert die Flächennormale hingegen innerhalb der Polygonfläche. Die durch die Tiefenstruktur verursachte Neigung der Pixelnormale muß deshalb an der lokalen Flächennormale der glatten, aber gekrümmten Polygonfläche ausgerichtet werden. Es muß also zunächst für alle Rasterelemente - wie bereits vorstehend beschrieben - die lokale Flächennormale der glatten Polygonfläche berechnet werden.

In einer vorteilhaften Variante der Erfindung ist vorgesehen, den Neigungswert, der den Oberflächenverlauf der zu simulierenden Tiefenstruktur wiedergibt, mit einem Skalierungsfaktor zu multiplizieren, um die räumliche Tiefe der Oberflächenstruktur zu verändern. Die Tiefenmatrix enthält hierbei also die maximalen Neigungswerte der lokalen Flächennormale gegenüber der Flächennormale der glatten Oberfläche. Diese maximalen Neigungswerte werden dann entsprechend dem Skalierungsfaktor abgeschwächt, um eine Tiefenstruktur mit beliebig einstellbarer räumlicher Tiefe zu simulieren. Auf diese Weise ist auch eine dynamische Simulation von Tiefenstrukturen mit veränderlicher räumlicher Tiefe möglich. Hierzu ist es lediglich erforderlich, den Skalierungsfaktor während der Darstellung zu verändern.

In der vorstehend beschriebenen Variante des erfindungsgemäßen Bildverarbeitungsverfahren wird die Tiefenstruktur bei der Darstellung eines Objekts simuliert, indem die lokale Flächennormale entsprechend der Oberfläche der zu simulierenden Tiefenstruktur geneigt wird. Die auf diese Weise geneigte lokale Flächennormale wird dann - wie vorstehend beschrieben - im Rahmen eines lokalen Beleuchtungsmodells zur Berechnung des Helligkeits- bzw. Farbeindrucks des jeweiligen Rasterelements herangezogen.

Ein andere Variante des erfindungsgemäßen Bildverarbeitungsverfahrens sieht dagegen vor, die Tiefenstruktur der Objektoberfläche bereits bei der Berechnung der die Hüllflächen nachbildenden Speichermatrizen zu simulieren. Der Inhalt der die Hüllflächen nachbildenden Speichermatrizen wird hierzu unter Berücksichtigung einer tiefenstrukturierten Oberfläche berechnet. Die Berechnung der Speichermatrizen kann - wie bereits vorstehend erwähnt - durch Ray-Tracing-Verfahren erfolgen. Hierbei wird ein von einem virtuellen Betrachter ausgehender "Sehstrahl" betrachtet, der an den Rasterelementen der Objektoberfläche reflektiert wird. Das von dem hierdurch entstehenden Reflexionsvektor geschnittene Objekt bzw. Detail der Umgebung definiert dann den Bildeindruck des spiegelnden Rasterelements. Zur Simulation einer Tiefenstruktur ist es dann lediglich erforderlich, bei der Berechnung des Reflexionsvektors aus dem "Sehstrahl" ein entsprechend dem Oberflächenverlauf der zu simulierenden Tiefenstruktur geneigtes Rasterelement zugrunde zu legen. Der Rechenaufwand zur Simulation einer Tiefenstruktur fällt also in dieser Variante des erfindungsgemäßen Bildverarbeitungsverfahrens nur bei der Vorberechnung der Speichermatrizen an.

Hierdurch wird während der Darstellung der räumlichen Szene vorteilhaft Rechenzeit gespart, was insbesondere bei einer Echt-Zeit-Darstellung von Bewegungsabläufen wichtig ist.

Das vorstehend beschriebene erfindungsgemäße Bildverarbeitungsverfahren sieht - wie bereits eingehend erläutert - für jedes Objekt eine Speichermatrix vor, die eine das Objekt umgebende Hüllfläche nachbildet und eine Rundumaufnahme der Umgebung aus der Perspektive des Objekts enthält. In den vorstehend beschriebenen Varianten der Erfindung ist der Inhalt dieser Speichermatrix jedoch statisch, so daß die darzustellende räumliche Szene ebenfalls statisch ist. Es ist zwar möglich, den virtuellen Betrachterstandort zu verändern und so durch die Szene hindurchzuwandern, jedoch ändert sich die Szene selbst hierbei nicht.

In einer vorteilhaften weiterbildenden Variante der Erfindung ist dagegen vorgesehen, die Umgebung der einzelnen Objekte dynamisch zu simulieren. Dies ist beispielsweise vorteilhaft, um einen Feuerschein oder fallende Regentropfen als Hintergrundbild darstellen zu können.

Dies kann beispielsweise dadurch geschehen, daß der Inhalt der Speichermatrizen entsprechend der zu simulierenden Animation laufend neu berechnet wird, wobei das jeweils aktuelle Erscheinungsbild des Hintergrunds berücksichtigt wird.

Bei zyklischen Bewegungen oder sich wiederholenden Bewegungsabläufen im Hintergrundbild ist es dagegen vorteilhaft, mehrere Speichermatrizen für jedes Objekt vorzusehen, die jeweils eine Momentaufnahme der Bewegung wiedergeben. Zur Erzeugung eines Bewegungseindrucks muß dann lediglich zwischen den einzelnen Speichermatrizen umgeschaltet werden. Hierbei ist es möglich, den Inhalt der Speichermatrizen vorzuberechnen, so daß während der eigentlichen Darstellung der räumlichen Szene lediglich zwischen den verschiedenen Speichermatrizen umgeschaltet werden muß. Hierdurch wird während der Darstellung der räumlichen Szene Rechenzeit gespart, was bei einer Echt-Zeit-Darstellung von Bewegungsabläufen vorteilhaft ist.

Neben der dynamischen Simulation der jeweiligen lokalen Umgebungen der einzelnen Objekte ist es auch möglich, die Texturen - also die zu simulierenden zwei-dimensionalen Oberflächenstrukturen - dynamisch zu simulieren. Auf diese Weise ist es beispielsweise möglich, bei der Darstellung von Objekten eine zeitlich variierende Oberflächenstruktur zu simulieren. Dies kann beispielsweise - wie bei der vorstehend beschriebenen dynamischen Simulation der Umgebung - dadurch geschehen, daß mehrere Speichermatrizen zur Speicherung des Texturbildes vorgesehen sind, wobei jede Speichermatrix jeweils eine Momentaufnahme des zu simulierenden Texturbildes enthält. Während der Darstellung der Objekte muß dann lediglich zwischen den einzelnen Speichermatrizen umgeschaltet werden, um einen Bewegungseindruck zu erhalten.

Da der Texturspeicher in der Regel direkt das Texturbild enthält, das der Oberfläche überlagert werden soll, ist es vorteilhaft möglich, als Texturspeicher den Bildwiederholspeicher eines Video- oder Computergrafiksystems zu verwenden oder den Texturspeicher in anderer Weise mit einem derartigen System zu verbinden. Auf diese Weise ist es mit Hilfe herkömmlicher Grafiksysteme möglich, bei der Darstellung von computer-modellierten Oberflächen beliebige Bildsequenzen als Oberflächenstrukturbild auf der Oberfläche dynamisch zu simulieren.

Zur dynamischen Simulation veränderlicher Umgebungs- oder Objektgrößen ist es also möglich, den Texturspeicher, den Tiefenstrukturspeicher oder die Speichermatrizen zu animieren, welche die Umgebung der einzelnen Objekte wiedergeben. Diese verschiedenen Möglichkeiten der Animation können allein oder in jeder beliebigen Kombination angewendet werden, um interessante optische Effekte zu erzielen.

Das erfindungsgemäße Bildverarbeitungsverfahren sieht - wie bereits eingehend erläutert - Speichermatrizen vor, die jeweils einem Objekt zugeordnet sind und eine das Objekt umgebende Hüllfläche nachbilden, wobei die Hüllfläche eine Rundumaufnahme aus der Perspektive des jeweiligen Objekts wiedergibt und somit die Berücksichtigung von Spiegelungen bei der Berechnung des Bildeindrucks ermöglicht. Jedem Flächenelement der Hüllfläche ist also ein Farb- bzw. Helligkeitswert zugeordnet, der die Bildwirkung der Umgebung aus einer bestimmten Perspektive des Betrachters wiedergibt. Welche Seite der Hüllfläche den Bildeindruck der Umgebung wiedergibt hängt also von der Position des Betrachters ab. Dies kann bei einer Interpolation der aus der Speichermatrix ausgelesenen Farb- bzw. Helligkeitswerte Probleme bereiten, da hierzu jeweils die Nachbar-Flächenelemente der Hüllfläche adressiert werden müssen, die jedoch unter Umständen zu unterschiedlichen Seitenflächen der Hüllfläche gehören. Da die einzelnen Seitenflächen der Hüllfläche in der Speichermatrix hintereinander in separaten Speicherbereichen abgelegt sind, können hierbei Fehladressierungen auftreten. Es ist deshalb vorteilhaft, in jedem Speicherbereich der Speichermatrix jeweils die Informationen einer kompletten Seitenfläche sowie die Randinformationen der benachbarten Seitenflächen abzuspeichern, um eine Interpolation der aus der Speichermatrix ausgelesenen Helligkeitsbzw. Farbwerte zu ermöglichen.

Der Körper bzw. die Fläche, die auf dem Bildschirm dargestellt werden soll, wird - wie bereits vorstehend beschrieben - im Computer als Gittermodell nachgebildet. Die Oberfläche besteht deshalb aus zahlreichen Polygonflächen, deren räumliche Lage durch die Raumkoordinaten der Knotenpunkte des Gittermodells definiert ist. In einer vorteilhaften Ausführungsform der Erfindung werden als Polygonflächen Dreiecke verwendet. Dies bedeutet, daß im Gittermodell jeweils drei Punkte durch Kanten miteinander verbunden sind. Die Verwendung von Dreiecken zur Modellierung der Oberflächen hat den Vorteil, daß die Flächennormale eines Dreiecks durch die Raumkoordinaten der Eckpunkte eindeutig definiert ist, da drei Punkte immer in einer Ebene liegen, während bei Polygonen mit mehr als drei Eckpunkten die Möglichkeit besteht, daß die Eckpunkte nicht exakt in einer Ebene liegen, so daß auch die Flächennormale nicht exakt definiert ist.

Das vorstehend beschriebene Verfahren ist nicht beschränkt auf eine monochrome Darstellung. Vielmehr kann das Verfahren nacheinander oder parallel für mehrere Farben - vorzugsweise die Grundfarben - durchgeführt werden. Hierbei kann auch ein farbabhängiges Reflexions- oder Absorptionsverhalten der Oberfläche berücksichtigt werden.

In einer vorteilhaften Variante der Erfindung ist die Vorrichtung als integrierte Schaltung in einem Prozessorsystem oder auch als selbständiger Prozessor ausgeführt, die an ihrem Eingang einen Parametersatz aufnimmt, der unter anderem die räumliche Lage einer Polygonfläche bestimmt. Am Ausgang werden dann die Raumkoordinaten einzelner Rasterelemente der Polygonfläche sowie der Helligkeitswert der Rasterelemente unter Berücksichtigung von Spiegelungen der Umgebung ausgegeben. Zur Darstellung der Polygonfläche auf einem Bildschirm müssen die Raumkoordinaten der einzelnen Rasterelemente dann lediglich in herkömmlicher Weise in ein 2-dimensionales Bildschirmkoordinatensystem transformiert werden. Die Schaltung läßt sich somit günstig in bestehende Computer-Grafiksysteme einbinden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Figur 1	als bevorzugtes Ausführungsbeispiel der Erfindung eine Schaltung zur Darstellung vom computermodellierten Objekten als Blockschaltbild,

Figur 2a bzw. 2b	zwei Objekte mit spiegelnden Oberflächen jeweils umgeben von kubischen Hüllflächen zur Berechnung der Spiegelungen,

Figur 3	ein Schema zur Berechnung der die kubischen Hüllflächen nachbildenden Speichermatrizen,

Figur 4	eine Baugruppe der Schaltung aus Figur 1 detailliert als Blockschaltbild,

Figur 5a, 5b	ein Schema zur Aufteilung einer Dreiecksfläche in Rasterelemente,

Figur 6a, 6b	jeweils eine Dreiecksfläche umgeben von einer kubischen Hüllfläche zur Berechnung des Farbbzw. Helligkeitswerts bei diffuser Reflexion bzw. Spiegelreflexion an der Dreiecksfläche sowie

Figur 7	eine Schaltung zur Nachbildung der in Figur 6a bzw. 6b dargestellten kubischen Hüllflächen als Blockschaltbild.

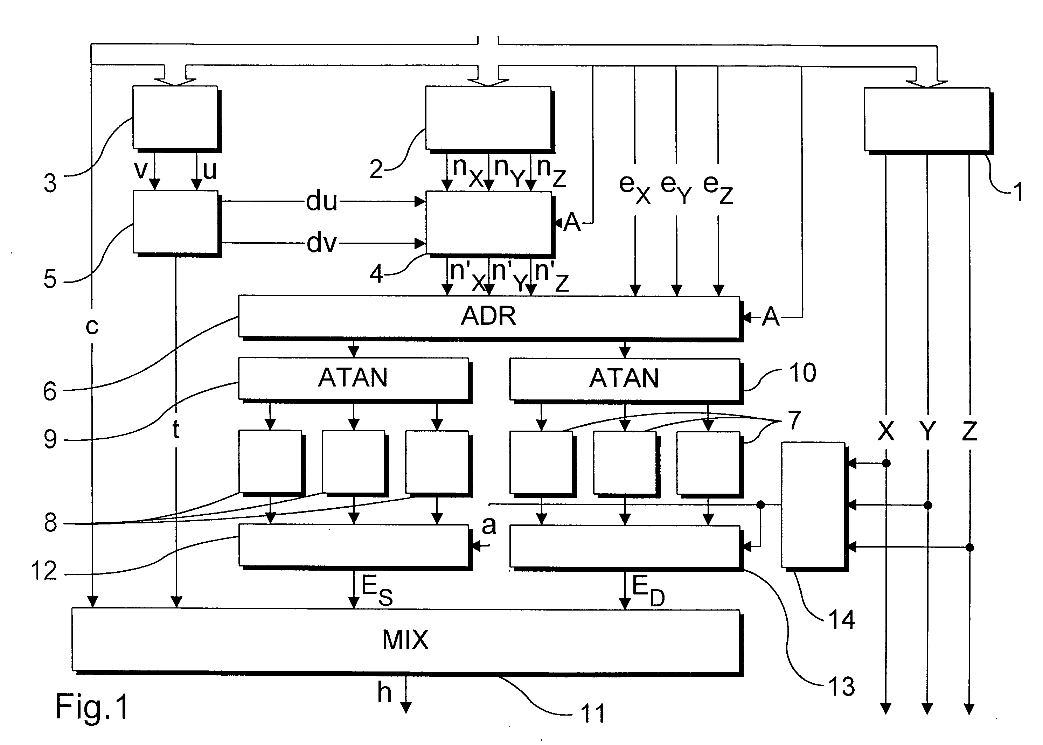

Die in Figur 1 dargestellte Schaltung wird bei der bildhaften Darstellung von Körpern oder Flächen verwendet, die in Form eines Gittermodells vorliegen. Die Oberfläche eines darzustellenden Körpers wird hierbei durch eine Vielzahl von aneinandergrenzenden Dreiecken nachgebildet, deren räumliche Lage durch die Raumkoordinaten der Knotenpunkte des Gittermodells definiert ist.

Die Schaltung ermöglicht bei der Darstellung von mehreren Objekten mit spiegelnden Oberflächen vorteilhaft die Berücksichtigung der Spiegelungen der Umgebung in den Objekten sowie der Objekte untereinander. In der angegebenen Ausführungsform ist die Darstellung von maximal drei Objekten mit spiegelnden Oberflächen möglich. Diese Beschränkung beruht jedoch ausschließlich auf der zur Wahrung der Übersichtlichkeit vereinfachten Ausführungform der Schaltung und ist nicht prinzipieller Art, wie noch eingehend erläutert wird. Weiterhin gestattet die Schaltung die Simulation einer Tiefenstruktur, also beispielsweise einer Oberflächenrauhigkeit, ohne die Tiefenstruktur im Gittermodell nachbilden zu müssen, was realistische Darstellungen auch mit relativ einfachen Gittermodellen ermöglicht. Dies wird auch dadurch unterstützt, daß den einzelnen Dreiecken jeweils ein zwei-dimensionales Oberflächenstrukturbild überlagert werden kann, das die Simulation einer charakteristischen Farb- oder Helligkeitsverteilung der Oberfläche ermöglicht. Auch hierbei braucht das Gittermodell nicht entsprechend verfeinert zu werden, was vorteilhaft Rechenzeit bei der Darstellung spart.

Als Eingangsgröße erhält die Schaltung für jedes Dreieck einen Parametersatz, der die räumliche Lage des Dreiecks sowie die gewünschten Materialeigenschaften der Oberfläche definiert.

So enthält der Parametersatz die Raumkoordinaten $(x_s, y_s, z_s)$ eines Eckpunkts des Dreiecks, die Kanteninkremente $\Delta lu$, $\Delta ru$, $\Delta ld$, $\Delta rd$, die Anzahl der Rasterzeilen $n_1$, $n_2$ des Dreiecks, sowie die Neigung $\Delta zx$ der Dreiecksfläche zur X-Achse und die Neigung $\Delta zy$ der Dreiecksfläche zur Y-Achse. Darüber hinaus enthält der Parametersatz Informationen über die Farbe der Dreiecksoberfläche, das Absorptionsverhalten, die Durchsichtigkeit der Dreiecksfläche und ähnliches. Weiterhin enthält der Parametersatz für jeden Eckpunkt des Dreiecks ein U,V-Koordinatenpaar, das die Position des jeweiligen Eckpunkts in der Tiefenstruktur definiert. Jedem Eckpunkt des Dreiecks ist also durch den Parametersatz ein Punkt der Tiefenstruktur zugeordnet.

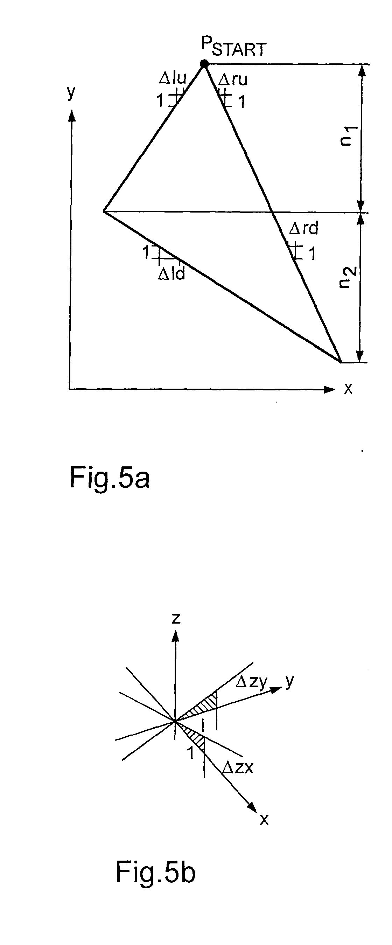

Die Daten des Parametersatzes, die die räumliche Lage des Dreiecks definieren, werden einer ersten Baugruppe 1 zugeführt, die die Dreiecksfläche zunächst in zahlreiche parallele Rasterzeilen und jede Rasterzeile wiederum in zahlreiche Rasterelemente aufteilt. Anschließend werden dann für jedes Rasterelement die Raumkoordinaten x, y, z berechnet. Die Aufteilung eines Dreiecks in Rasterelemente sowie die Berechnung der Raumkoordinaten der einzelnen Rasterelemente ist detailliert in der Beschreibung zu den Figuren 5a und 5b erläutert.

Der am Eingang der Schaltung anliegende Parametersatz wird zusätzlich einer zweiten Baugruppe 2 zugeführt, die daraus die Flächennormale $(n_x, n_y, n_z)^T$ der Dreiecksfläche berechnet. Darüber hinaus berechnet die zweite Recheneinheit 2 aus der vorgegebenen Position des Betrachters und der Position $(x_s, y_s, z_s)$ des Dreiecks den Betrachtungsvektor $(e_x, e_y, e_z)^T$, also die Blickrichtung des Betrachters.

Darüber hinaus wird der Parametersatz einer dritten Baugruppe 3 zugeführt, die aus den U,V-Koordinaten der Eckpunkte des Dreiecks die U,V-Koordinaten der einzelnen Rasterelemente interpoliert. Es wird also für jedes Rasterelement der zugehörige Punkt in der Tiefenstruktur berechnet.

Weiterhin wird eine Matrix **M** berechnet, die die Raumkoordinaten X, Y, Z der einzelnen Rasterelemente auf die U,V-Koordinaten der jeweiligen Rasterelemente - also deren Position innerhalb der zu simulierenden Tiefenstruktur - abbildet:

$$\begin{bmatrix} u \\ v \end{bmatrix} = \begin{bmatrix} x & y & z \end{bmatrix} \cdot \begin{bmatrix} M_{00} & M_{01} \\ M_{10} & M_{11} \\ M_{20} & M_{21} \end{bmatrix}$$

Der eingangsseitig aufgenommene Parametersatz enthält - wie bereits vorstehend beschrieben - für jeden Eckpunkt des Dreiecks die U,V-Koordinaten. Da auch die X,Y,Z-Koordinaten der drei Eckpunkte bekannt sind, ist also ein Gleichungssystem von sechs Gleichungen mit insgesamt sechs Unbekannten $M_{ij}$ gegeben, das auf einfache Weise durch Anwendung der Cramer'schen Regel gelöst wird.

Die Matrix **M** dient zum einen zur Drehung der Tiefenstruktur parallel zur Dreiecksfläche und zum anderen - wie noch eingehend erläutert wird - zur Berechnung einer weiteren Matrix, die den sich aus der Tiefenstruktur ergebenden Neigungsvektor an der Flächennormale der Polygonfläche ausrichtet, um die räumliche Lage der lokalen Flächennormale entsprechend dem Oberflächenverlauf der Tiefenstruktur zu berechnen.

**EP 0 789 328 B1**

Die auf diese Weise für jedes Rasterelement gewonnenen U,V-Koordinaten werden einer Zuordnungseinheit 5 zugeführt, die jedem Wertepaar (U,V) jeweils einen die Tiefenstruktur der Oberfläche definierenden Tiefenwert (du, dv) sowie einen die Textur der Oberfläche definierenden Texturwert t zuweist.

Die Zuordnungseinheit 5 weist hierzu zwei zweidimensionale Speichermatrizen - die Texturmatrix und die Tiefenmatrix - auf, die jeweils durch ein U,V-Wertepaar adressiert werden.

Die Texturmatrix definiert ein ebenes Muster, das auf die Oberfläche des Dreiecks aufgeblendet wird. Jedes U,V-Wertepaar adressiert also ein Element der Texturmatrix, das den Helligkeits- oder Farbwert des zugehörigen Rasterelements auf der Oberfläche des Dreiecks bestimmt. Die Helligkeit der Dreiecksoberfläche ist deshalb nicht völlig einheitlich, sondern kann - in Abhängigkeit von dem in der Texturmatrix gespeicherten Muster - von Rasterelement zu Rasterelement schwanken. Hierdurch erscheint die Oberfläche nicht völlig einheitlich und wirkt deshalb wesentlich realistischer. So kann beispielsweise die Maserung einer Holzoberfläche simuliert werden. Wichtig ist in diesem Zusammenhang, daß die Texturmatrix lediglich die Helligkeitsoder Farbverteilung des gewünschten Musters enthält, nicht jedoch eine Tiefenstruktur simuliert. Die Oberfläche des Dreiecks erscheint also zunächst völlig glatt.

Zur Simulation einer Tiefenstruktur, also einer beliebigen Oberflächenrauhigkeit, dient die Tiefenmatrix, die - wie die Texturmatrix - durch das U,V-Wertepaar adressiert wird.

Die Tiefenmatrix enthält hierbei Neigungswerte (du, dv), die die Neigung der lokalen Flächennormale entsprechend dem Oberflächenverlauf der zu simulierenden Tiefenstruktur wiedergeben.

Entscheidend für die Nachbildung der Tiefenstruktur ist die Ausrichtung der lokalen Flächennormale in den verschiedenen Rasterelementen, da hierdurch das Reflexionsverhalten der Oberfläche bestimmt wird. Die Tiefenmatrix definiert deshalb, wie die Flächennormale an den einzelnen Punkten innerhalb des Tiefenmusters gegenüber der Flächennormale des gesamten Musters geneigt ist. Die Tiefenmatrix enthält also jeweils einen Wert $\Delta u$, der die Neigung der lokalen Flächennormale relativ zur U-Achse bestimmt, sowie einen Wert $\Delta v$, der die Neigung relativ zur V-Achse bestimmt.

Da jedes Rasterelement auf ein U,V-Wertepaar abgebildet wird, definiert die Tiefenmatrix also die auf die Oberfläche des Dreiecks aufzuprägende Tiefenstruktur.

Weiterhin weist die Schaltung eine vierte Baugruppe 4 auf, die aus der Flächennormale $(n_x, n_y, n_z)^T$ und den lokalen Neigungswerten $\Delta u$ und $\Delta v$ die Pixelnormale, also die lokale Flächennormale $(n_x', n_y', n_z')$ am Ort jedes Rasterelements berechnet.

Hierzu multipliziert die vierte Baugruppe 4 die Abweichungen $\Delta u$ und $\Delta v$ mit einer Abbildungsmatrix **A** und addiert diese zu der Flächennormale $(n_x, n_y, n_z)^T$:

$$\begin{bmatrix} n_x' \\ n_y' \\ n_z' \end{bmatrix} = \begin{bmatrix} n_x \\ n_y \\ n_z \end{bmatrix} + \begin{bmatrix} A_{00} & A_{01} \\ A_{10} & A_{11} \\ A_{20} & A_{21} \end{bmatrix} \cdot \begin{bmatrix} \Delta u \\ \Delta v \end{bmatrix}$$

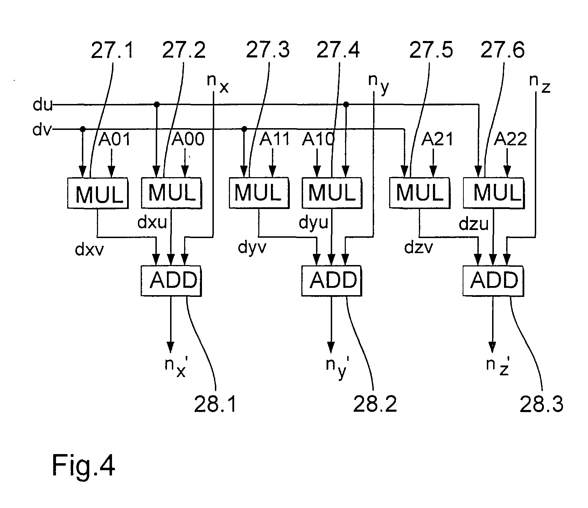

Die vierte Baugruppe ist in Figur 4 detailliert als Blockschaltbild dargestellt.

Die Rasterelemente eines Dreiecks weisen also entsprechend der in der Tiefenmatrix gespeicherten Tiefenstruktur jeweils eine geneigte lokale Flächennormale - im folgenden als Pixelnormale bezeichnet - auf, so daß die Helligkeit der Rasterelemente aufgrund der Winkelabhängigkeit des Reflexionsverhaltens innerhalb eines Dreiecks schwanken kann. Im Gegensatz zu dem ebenfalls auf die Oberfläche des Dreiecks aufgetragenen ebenen Texturbild hängt die Helligkeit eines Rasterelements jedoch nicht nur von der Lage des Rasterelements innerhalb der Dreiecksfläche ab, sondern auch von der Lage des Beobachters und der Lichtquellen relativ zu der Dreiecksfläche. Bei einem Positionswechsel des Betrachters ändert sich also entsprechend die Wahrnehmung der Tiefenstruktur, während die Wahrnehmung des Texturbildes unverändert bleibt.

Die Berechnung des lokalen Helligkeitswerts erfolgt mittels einer weiteren Baugruppe 6, die in Abhängigkeit von der Position des Betrachters - gegeben durch den Betrachtungsvektor $(e_x, e_y, e_z)^T$ - und der Pixelnormalen $(n_x', n_y', n_z')$ aus einer Speichermatrix 7, 8 den lokalen Helligkeits- bzw. Farbwert ausliest.

Die Speichermatrizen 7, 8 bilden hierbei kubische Hüllflächen nach, die jeweils ein Objekt umgeben, wobei jedem Flächenelement der Hüllfläche ein Helligkeits- bzw. Farbwert zugeordnet ist. Die Hüllflächen geben also eine Rundumaufnahme aus der Perspektive des jeweiligen Objekts wieder und ermöglichen somit eine Berechnung des bei der Betrachtung spiegelnder Objektflächen entstehenden Bildeindrucks. Welches Flächenelement einer Hüllfläche bzw. welcher Speicherplatz der zugehörigen Speichermatrix den vom Betrachter wahrgenommenen Helligkeits- bzw. Farbwert enthält hängt hierbei von der Perspektive des Betrachters und der lokalen Flächennormale des betrachteten Rasterelements ab.

9

Da die Positionen der einzelnen Objekte innerhalb der darzustellenden räumlichen Szene unterschiedlich sind und somit auch die in einem Objekt sich spiegelnde Umgebung bei jedem Objekts unterschiedlich aussieht, sind jedem Objekt Speichermatrizen zugeordnet, die eine das jeweilige Objekt umgebende Hüllfläche nachbilden. Welche der Speichermatrizen 7, 8 zur Berechnung des Farb- bzw. Helligkeitswerts herangezogen wird, hängt hierbei von der Position des betrachteten Rasterelements ab. Es ist hierbei diejenige Speichermatrix heranzuziehen, die eine das jeweilige Rasterelement umgebende Hüllfläche nachbildet. Die Raumkoordinaten x, y, z des Rasterelements werden deshalb zur Auswahl einer der Speichermatrizen einer Auswahleinheit 14 zugeführt, welche die Koordinatenwerte x, y, z des betrachteten Rasterelements mit den Grenzwerten der verschiedenen Hüllflächen vergleicht und ein Auswahlsignal a erzeugt, das die Speichermatrix bestimmt, die zur Berechnung des Farb- bzw. Helligkeitswerts heranzuziehen ist. Zur Auswahl der Speichermatrix ist sowohl den drei Speichermatrizen 8 zur Berechnung der Spiegelreflexion als auch den drei Speichermatrizen zur Berechnung der diffusen Reflexion jeweils eine Selektionseinheit 12, 13 nachgeschaltet, die mit der Auswahleinheit 14 verbunden ist und in Abhängigkeit von dem Auswahlwert a das Ausgangssignale jeweils einer der drei Speichermatrizen 7 bzw. 8 selektiert.

In diesem Zusammenhang ist zu unterscheiden zwischen diffuser und Spiegelreflexion an dem Rasterelement. Diese beiden Reflexionsarten werden getrennt berechnet.

Es ist deshalb zur Berechnung des Farb- bzw. Helligkeitswerts für diffuse Reflexion für jedes Objekt jeweils eine 3-dimensionale Speichermatrix 7 und für die Berechnung des Farb- bzw. Helligkeitswerts für Spiegelreflexion jeweils eine weitere 3-dimensionale Speichermatrix 8 vorgesehen.

Bei diffuser Reflexion wird angenommen, daß das Licht gleichmäßig in alle Richtungen abgestrahlt wird, während bei Spiegelreflexion die Abstrahlung nach den Gesetzen der geometrischen Strahlenoptik erfolgt, wobei Einfallswinkel und Ausfallswinkel gleich sind. Betrachtet man nun nicht einen von der Lichtquelle ausgehenden Lichtstrahl, sondern umgekehrt einen vom Betrachter ausgehenden "Sehstrahl", so wird dieser "Sehstrahl" an dem Rasterelement in Richtung eines Reflexionsvektor R reflektiert. Die Pixelnormale, der Reflexionsvektor und die Betrachtungsrichtung liegen also in einer Ebene, wobei der Winkel zwischen der Pixelnormale und der Betrachtungsrichtung gleich dem Winkel zwischen dem Reflexionsvektor und der Pixelnormale ist.

Für den Reflexionsvektor gilt also in Abhängigkeit von der Pixelnormale $N_U$ und der Betrachtungsrichtung bzw. dem "Sehstrahl" E:

$$\vec{R} = 2 \cdot \vec{N}_U \cdot (\vec{N}_U \cdot \vec{E}) + \vec{E} \cdot (\vec{N}_U \cdot \vec{N}_U)$$

also in Komponentenschreibweise:

$$\begin{bmatrix} r_x \\ r_y \\ r_z \end{bmatrix} = 2 \cdot \begin{bmatrix} n_x \\ n_y \\ n_z \end{bmatrix} \cdot \left( n_x \cdot e_x + n_y \cdot e_y + n_z \cdot e_z \right) + \begin{bmatrix} e_x \\ e_y \\ e_z \end{bmatrix} \cdot \left( n_x{}^2 + n_y{}^2 + n_z{}^2 \right)$$

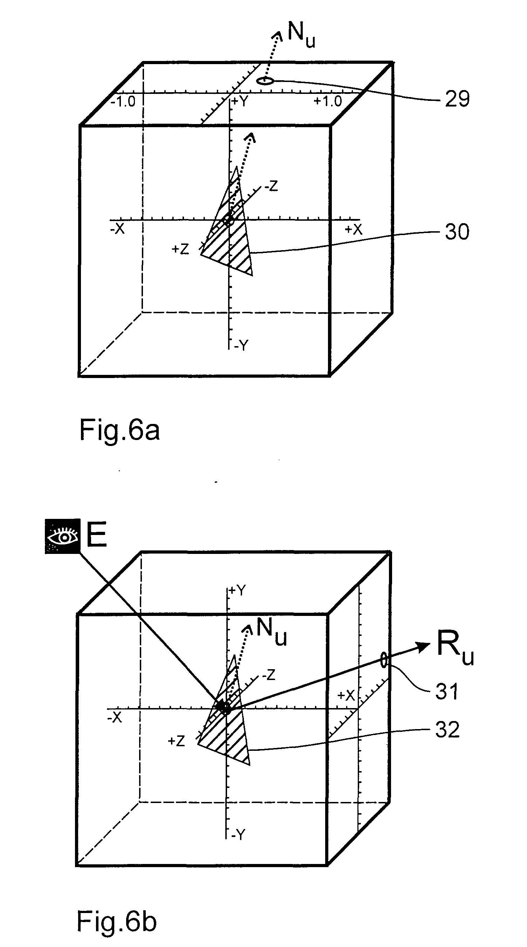

Die Speichermatrix 7, 8 zur Berechnung des Farb- bzw. Helligkeitswerts eines Rasterelements bildet eine kubische Hüllfläche nach, die das jeweilige Rasterelement umgibt. Die Figuren 6a und 6b zeigen eine derartige kubische Hüllfläche. Jedem Flächenelement der Hüllfläche ist dabei ein Farb- bzw. Helligkeitswert zugeordnet.

Zur Berechnung der diffusen Reflexion ist deshalb das Flächenelement der kubischen Hüllfläche zu bestimmen, das von der Pixelnormalen oder deren Verlängerung geschnitten wird. Der diesem Flächenelement zugeordnete Wert ist dann der diffuse Reflexionsfaktor.

In gleicher Weise ist zur Berechnung der Spiegelreflexion der Punkt der Hüllfläche zu bestimmen, an dem der Reflexionsvektor oder dessen Verlängerung die Hüllfläche durchstößt. Der diesem Punkt der Hüllfläche zugeordnet Wert definiert dann den Farb- bzw. Helligkeitswert des jeweiligen Rasterelements bei Spiegelreflexion.

Die Werte auf der Hüllfläche definieren also die Beleuchtungsumgebung des Dreiecks und entsprechen einer Rundum-Aufnahme der Umgebung aus der Perspektive des Dreiecks. Es ist deshalb vorteilhaft möglich, die Spiegelungen der Umgebung sowie anderer Objekte zu berücksichtigen. Hierzu müssen die Inhalte der Speichermatrizen 7, 8 lediglich in geeigneter Weise vorberechnet werden. Auch ist die Simulation beliebig verteilter Lichtquellen möglich. Darüber hinaus kann der Betrachter seine Position beliebig verändern, also durch eine Szenerie virtuell hindurchwandern, wobei sich der Seheindruck des Betrachters automatisch an die veränderte Perspektive anpaßt.

Die kubische Hüllfläche wird - wie bereits vorstehend beschrieben - jeweils durch eine dreidimensionale Speichermatrix 7 bzw. 8 nachgebildet. Die erste Dimension der Speichermatrix kann Werte zwischen 1 und 6 annehmen und gibt an, welche Seitenfläche der Hüllfläche von der Pixelnormalen bzw. dem Reflexionsvektor durchstoßen wird.

Die Adressierung der anderen beiden Dimensionen der Speichermatrix 7, 8 erfolgt in Abhängigkeit von der Position des Schnittpunktes auf der jeweiligen Seitenfläche. Durchstößt die Pixelnormale bzw. der Reflexionsvektor beispielsweise eine zur XZ-Ebene parallele Seitenfläche der kubischen Hüllfläche, so adressiert die Y-Koordinate des Schnittpunkts die zweite Dimension und die Z-Koordinate des Schnittpunkts die dritte Dimension der Reflexionsmatrix. Die Adressierung erfolgt hierbei nicht direkt durch die Raumkoordinaten des Schnittpunkts, sondern indirekt durch Zwischenschaltung jeweils einer weiteren Recheneinheit 9 bzw. 10, die den Winkel zu der die Seitenfläche durchstoßenden Achse des Koordinatensystems in zwei zueinander rechtwinkligen Ebenen berechnet.

Die Berechnung der Farb- bzw. Helligkeitswerte für diffuse Reflexion und Spiegelreflexion wird detailliert in der Beschreibung zu den Figuren 6a bzw. 6b erläutert.

Aus den Reflexionsmatrizen 7, 8 wird also ein Farb- bzw. Helligkeitswert $E_D$ für diffuse Reflexion und ein Farb- bzw. Helligkeitswert $E_S$ und Spiegelreflexion ausgelesen, der den Seheindruck der Betrachters unter Berücksichtigung der aktuellen Perspektive wiedergibt. Darüber hinaus stellt die Zuordnungseinheit 5 einen Texturwert t für jedes Rasterelement bereit, der die Simulation einer zwei-dimensionalen Oberflächenstruktur des Dreiecks ermöglicht. Die beiden Farb- bzw. Helligkeitswerte $E_D$, $E_S$ sowie der Texturwert t werden einer Überblendeinheit 11 zugeführt, die daraus, sowie aus dem Farbwert c der Dreiecksfläche einen Helligkeitswert h berechnet.

Am Ausgang gibt die Schaltung dann die Raumkoordinaten x, y, z des jeweiligen Rasterelements sowie den berechneten Helligkeitswert h aus.

Zur Darstellung auf einem Bildschirm müssen die Raumkoordinaten x, y, z des Rasterelements lediglich in Bildschirmkoordinaten umgerechnet werden, was beispielsweise mittels einer nachgeschalteten Recheneinheit durch eine Zentralprojektion der räumlichen Szene erfolgen kann.

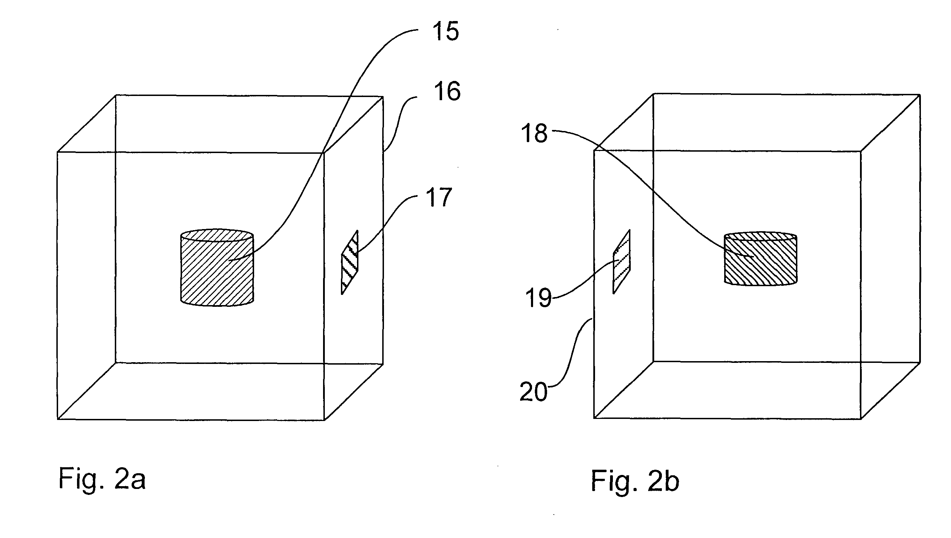

Die Figuren 2a und 2b zeigen zwei Objekte 15, 18 mit spiegelnden Oberflächen, die jeweils von einer kubischen Hüllfläche 16, 20 umgeben sind, welche eine Rundumaufnahme der Umgebung des jeweiligen Objekts 15 bzw. 18 wiedergibt und somit die Berücksichtigung von Spiegelungen in den Objekten 15, 18 ermöglicht. Jedem Flächenelement der Hüllfläche 26, 20 ist hierbei ein Farb- bzw. Helligkeitswert zugeordnet, der den Bildeindruck der Umgebung des Objekts 15 bzw. 18 in einer bestimmten Richtung wiedergibt.

Die Darstellung gibt hierbei zur Wahrung der Übersichtlichkeit lediglich diejenigen Farb- bzw. Helligkeitswerte der Hüllflächen 16, 20 wieder, die von Spiegelungen der beiden Objekte untereinander herrühren, während die Spiegelungen einer die beiden Objekte 15, 18 umgebenden "globalen" Umgebung vernachlässigt werden. Die Speichermatrizen, die die kubischen Hüllflächen 16, 20 nachbilden, geben dagegen sowohl die Spiegelungen der Umgebung in einem Objekt als auch die Spiegelungen der Objekte 15, 18 untereinander wieder, um einen möglichst realistischen Bildeindruck zu erzielen.

Wie aus der Darstellung zu entnehmen ist, enthält die dem zweiten Objekt 18 zugewandte Seitenfläche der das erste Objekt 15 umgebenden Hüllfläche 16 nahezu zentral ein Abbild des zweiten Objekts 18. Zur Berechnung der Farb- bzw. Helligkeitsverteilung auf den einzelnen Hüllflächen 16, 20 werden die Objekte 15, 18 also jeweils auf die Seitenflächen der dem anderen Objekt zugeordneten Hüllfläche projiziert. Entsprechend enthält die dem ersten Objekt 15 zugewandte Seitenfläche der Hüllfläche 20 des zweiten Objekts 18 ebenfalls nahezu zentral ein Abbild des ersten Objekts 15. Bei der Betrachtung eines Rasterelements des ersten Objekts 15 nimmt der Betrachter dann das zweite Objekt 18 wahr, wenn der aus der Reflexion des "Sehstrahls" an dem Rasterelement resultierende Reflexionsvektor die zugehörige Hüllfläche 16 im Bereich des Abbildes 17 schneidet.

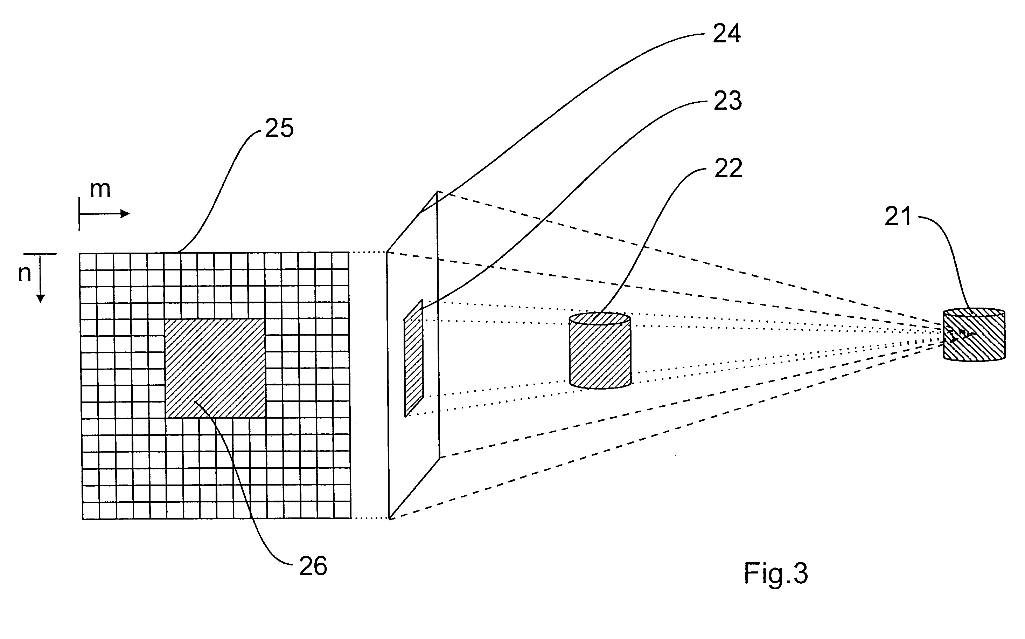

Die Berechnung der Farb- bzw. Helligkeitsverteilung auf den Hüllflächen ist detailliert in Figur 3 anhand zweier Objekte 21, 22 mit spiegelnden Oberflächen dargestellt. Zur Vereinfachung der Darstellung ist hierbei lediglich die Seitenfläche der das Objekt 21 umgebenden Hüllfläche wiedergegeben, die dem anderen Objekt 22 zugewandt ist, da die anderen Seitenflächen ohnehin andere Objekte oder die "globale" Umgebung wiedergeben und deshalb hier nicht relevant sind. Die ein Objekt umgebende Hüllfläche gibt - wie bereits vorstehend erläutert - eine Rundumaufnahme aus der Perspektive des jeweiligen Objekts wieder. Die aus den Spiegelungen des Objekts 22 in dem anderen Objekt 21 resultierende Farb- bzw. Helligkeitsverteilung auf der Seitenfläche 24 der Hüllfläche wird deshalb durch Zentralprojektion des Objekts 22 auf die Seitenfläche 24 der Hüllfläche ermittelt, wobei das Projektionszentrum im Mittelpunkt des anderen Objekts 21 liegt. Weiterhin zeigt Figur 3 den Bereich 25 der die Hüllfläche nachbildenden Speichermatrix, der der Seitenfläche 24 der Hüllfläche zugeordnet ist. Aus der Darstellung ist ersichtlich, daß jeder Speicherplatz der Speichermatrix einem Flächenelement der Seitenfläche 24 zugeordnet ist und somit die Farb- bzw. Helligkeitsverteilung auf der Hüllfläche wiedergibt. Zur Vereinfachung sind die Speicherplätze, die das Abbild des Objekts 22 auf der Seitenfläche 24 wiedergeben einheitlich schraffiert dargestellt. Tatsächlich enthalten die Speicherplätze der Speichermatrix jedoch Farb- bzw. Helligkeitswerte in einer Vielzahl von Abstufungen, was eine realistische Wiedergabe von Spiegelungen ermöglicht.

Figur 4 zeigt den inneren Aufbau der vierten Recheneinheit. Die vierte Recheneinheit besteht im wesentlichen aus sechs Multiplizierern 27.1 bis 27.6 und drei Addierern 28.1 bis 28.3, die aus den Neigungskomponenten $\Delta u$ und $\Delta v$, der Transformationsmatrix A und den Komponenten $n_x$, $n_y$, $n_z$ die lokale Flächennormale (Pixelnormale) für jedes Rasterelement des Dreiecks berechnen:

$$\begin{bmatrix} n'_x \\ n'_y \\ n'_z \end{bmatrix} = \begin{bmatrix} n_x \\ n_y \\ n_z \end{bmatrix} + \begin{bmatrix} A_{00} & A_{01} \\ A_{10} & A_{11} \\ A_{20} & A_{21} \end{bmatrix} \cdot \begin{bmatrix} \Delta u \\ \Delta v \end{bmatrix}$$

Hierzu liegen an den Eingängen der Multiplizierer 27.1 bis 27.6 die Koeffizienten $A_{ij}$ der Transformationsmatrix und jeweils eine der Neigungskomponenten $\Delta u$ oder $\Delta v$. Die Ausgangssignale dxv, dxu, dyv, dyu, dzv, dzu der Multiplizierer 27.1 bis 27.6 werden zusammen mit den Komponenten $n_x$, $n_y$, $n_z$ der Flächennormale des Dreiecks den Addierern 28.1 bis 28.3 zugeführt, die daraus die Komponenten $n'_x$, $n'_y$, $n'_z$ der Pixelnormale berechnen.

Wie bereits in der Beschreibung zu Figur 1 erwähnt, erhält die Schaltung an ihrem Eingang einen Parametersatz, der unter anderem die räumliche Lage des darzustellenden Dreiecks bestimmt. Die Figuren 5a und 5b zeigen die Bedeutung dieser Parameter anhand eines Beispiels.

Der Parametersatz enthält unter anderem die Raumkoordinaten $x_s$, $y_s$, $z_s$ eines Eckpunkts $P_{start}$ des Dreiecks. Dieser Eckpunkt dient als Startpunkt und definiert die Position des Dreiecks im Raum, während die Kanteninkremente $\Delta lu$, $\Delta ru$, $\Delta ld$, $\Delta rd$ die Form des Dreiecks sowie die Lage des Dreiecks relativ zu den Koordinatenachsen definieren.

Ausgehend vom Startpunkt $P_{start}$ wird das Dreieck in Rasterzeilen und jede Rasterzeile wiederum in Rasterelemente aufgeteilt. Die einzelnen Rasterzeilen verlaufen dabei jeweils parallel zur X-Achse. Das Kanteninkrement $\Delta lu$ bzw. $\Delta ld$ definiert die Steigung der links des Startpunkts liegenden Dreieckskante relativ zur Y-Achse, während das Kanteninkrement $\Delta ru$ bzw. $\Delta rd$ die Steigung der rechts liegenden Dreieckskante relativ zur Y-Achse definiert. Auf diese Weise lassen sich die Raumkoordinaten von Anfangs- und Endpunkt jeder Rasterzeile berechnen.

Da die Rasterzeilen parallel zur X-Achse verlaufen, ergibt sich die Y-Koordinate sowohl des Anfangspunkts als auch des Endpunkts jeder Rasterzeile aus der Y-Koordinate $y_s$ des Startpunkts und der Nummer der Rasterzeile:

$$y_l = y_s + i \qquad y_r = y_s + i$$

Die X-Koordinate $x_1$ des Anfangspunkte jeder Rasterzeile ergibt sich entsprechend aus der X-Koordinate $x_s$ des Startpunkts $P_{start}$, der Nummer i der Rasterzeile sowie dem Kanteninkrement $\Delta lu$ bzw. $\Delta ld$. Innerhalb der ersten $n_1$ Rasterzeilen wird hierbei das Kanteninkrement $\Delta lu$ und anschließend das Kanteninkrement $\Delta ld$ verwendet.

$$x_l = x_s + \Delta lu \cdot i \qquad \text{für } i \leq n_1$$

$$x_l = x_s + \Delta lu \cdot n_1 + (i - n_1) \cdot \Delta ld \qquad \text{für } n_1 \leq i < n_1 + n_2$$

In gleicher Weise ergibt sich die X-Koordinate $x_r$ des Endpunkts jeder Rasterzeile aus der X-Koordinate $x_s$ des Startpunkts $P_{start}$, der Nummer i der Rasterzeile sowie dem Kanteninkrement $\Delta ru$ bzw. $\Delta rd$. Hierbei wird während der ersten $n_1$ Rasterzeilen das Kanteninkrement $\Delta ru$ und anschließend das Kanteninkrement $\Delta rd$ verwendet:

$$x_r = x_s + \Delta ru \cdot i \qquad \text{für } i \leq n_1$$

$$x_r = x_s + \Delta ru \cdot n_1 + (i - n_1) \cdot \Delta rd \qquad \text{für } n_1 < i < n_1 + n_2$$

Die Z-Koordinate $z_l$ des Anfangspunkts ergibt sich aus der Z-Koordinate $z_s$ des Startpunkts, der Nummer der Rasterzeile sowie den Neigungen der Dreiecksfläche zur X-Achse und zur Y-Achse:

$$z_l = z_s + i \cdot \Delta zy + (x_l - x_s) \cdot \Delta zx$$

Die Rasterzeilen werden dann in Rasterelemente aufgeteilt, wobei für jedes Rasterelement aus den bekannten Koordinaten der Anfangs- und Endpunkte der Rasterzeilen die Raumkoordinaten berechnet werden.

Da die Rasterzeilen parallel zur X-Achse verlaufen, ist die Y-Koordinate jedes Rasterelements gleich der Y-Koordinate der zugehörigen Rasterzeile:

$$y_j = y_l$$

Die X-Koordinate jedes Rasterelements ergibt sich aus der X-Koordinate $x_l$ des Anfangspunkts der Rasterzeile, und der Nummer j des Rasterelements in der Rasterzeile:

$$x_j = x_l + j$$

Die Z-Koordinate eines Rasterelements ergibt sich aus der Z-Koordinate $z_l$ des Anfangspunkts der zugehörigen Rasterzeile, der Nummer j des Rasterelements innerhalb der Rasterzeile und der Neigung $\Delta zx$ der Dreiecksfläche relativ zur X-Achse.

$$z_j = z_l + j \cdot \Delta zy$$

Auf diese Weise werden die Raumkoordinaten $x_j$, $y_j$, $z_j$ für jedes Rasterelement der Dreiecksfläche berechnet.
Der in Figur 6a dargestellte Kubus dient zur Berechnung des Farb- bzw. Helligkeitswerts eines Rasterelements bei diffuser Reflexion an dem Rasterelement.
Bei diffuser Reflexion wird das Licht - wie bereits vorstehend ausgeführt - weitgehend gleichmäßig in alle Richtung abgestrahlt. Die Helligkeit eines Rasterelements ist deshalb nicht abhängig von der Perspektive des Betrachters, sondern wird ausschließlich von der Lage der Pixelnormale relativ zur Beleuchtungsumgebung bestimmt.
Zur Berechnung des Reflexionsfaktors wird der Kubus so positioniert, daß -das aktuelle Rasterelement im Mittelpunkt des Kubus liegt. Der Kubus bildet also eine Hüllfläche um das Rasterelement, wobei jedem Flächenelement der Hüllfläche ein Farb- bzw. Helligkeitswert zugeordnet ist.
Zur Berechnung des Bildeindruck eines Rasterelements wird dann der Schnittpunkt 29 der Pixelnormale $N_U$ mit der Hüllfläche bestimmt und der zugehörige Farb- bzw. Helligkeitswert ermittelt.
Die Farb- bzw. Helligkeitswerte auf der Hüllfläche definieren also die Umgebung des Dreiecks 30 und entsprechen einer Rundumaufnahme der Umgebung aus der Perspektive des Dreiecks 30. Es ist deshalb vorteilhaft möglich, die Spiegelungen der Umgebung sowie anderer Objekte zu berücksichtigen. Auch ist die Simulation beliebig verteilter Lichtquellen möglich.
Der Kubus wird hierbei als 3-dimensionale Speichermatrix realisiert, wobei die erste Dimension der Speichermatrix angibt, welche Seitenfläche des Kubus von der Pixelnormale $N_U$ geschnitten wird, während die beiden anderen Dimensionen die Lage des Schnittpunkts 29 innerhalb der Seitenfläche wiedergeben.
Welche Hüllfläche von der Pixelnormale $N_U$ durchstoßen wird - also die Adressierung der ersten Dimension der Speichermatrix -, hängt lediglich von dem Verhältnis der einzelnen Komponenten der Pixelnormale $N_U$ ab. Ist beispielsweise die X-Komponente betragsmäßig größer als die beiden anderen Komponenten und größer als Null, so durchstößt die Pixelnormale $N_U$ die Seitenfläche der Hüllfläche, die von dem positiven Ast der X-Achse rechtwinklig geschnitten wird und die erste Dimension der Speichermatrix nimmt entsprechend den Wert 1 an.
Allgemein ergibt sich für den Adreßwert $a_1$ der ersten Dimension der Speichermatrix in Abhängigkeit von den Komponenten $n_x$, $n_y$, $n_z$ der Pixelnormale $N_U$:

$$a_1 = \begin{cases} 1 & falls & \max\left[n_x, n_y, n_z\right] = n_x > 0 \\ 2 & falls & \max\left[n_x, n_y, n_z\right] = n_x < 0 \\ 3 & falls & \max\left[n_x, n_y, n_z\right] = n_y > 0 \\ 4 & falls & \max\left[n_x, n_y, n_z\right] = n_y < 0 \\ 5 & falls & \max\left[n_x, n_y, n_z\right] = n_z > 0 \\ 6 & falls & \max\left[n_x, n_y, n_z\right] = n_z < 0 \end{cases}$$

Die Adressierung der anderen beiden Dimensionen $a_2$, $a_3$ der Speichermatrix erfolgt in Abhängigkeit von der Position des Schnittpunktes 29 auf der jeweiligen Seitenfläche. Durchstößt die Pixelnormale beispielsweise eine zur XZ-Ebene parallele Seitenfläche der kubischen Hüllfläche, so adressiert die Y-Koordinate des Schnittpunkts die zweite Dimension und die Z-Koordinate des Schnittpunkts die dritte Dimension der Speichermatrix.

Allgemein gilt für die Adressierung der anderen beiden Dimensionen $a_2$, $a_3$ der Speichermatrix:

$$a_2 = \begin{cases} \arctan\left(\dfrac{n_y}{|n_x|}\right) & falls \quad a_1 = 1\,oder\,2 \\[2em] \arctan\left(\dfrac{n_x}{|n_y|}\right) & falls \quad a_1 = 3\,oder\,4 \\[2em] \arctan\left(\dfrac{n_x}{|n_z|}\right) & falls \quad a_1 = 5\,oder\,6 \end{cases} \qquad a_3 = \begin{cases} \arctan\left(\dfrac{n_z}{|n_x|}\right) & falls \quad a_1 = 1\,oder\,2 \\[2em] \arctan\left(\dfrac{n_z}{|n_y|}\right) & falls \quad a_1 = 3\,oder\,4 \\[2em] \arctan\left(\dfrac{n_y}{|n_z|}\right) & falls \quad a_1 = 5\,oder\,6 \end{cases}$$

Figur 6b zeigt einen weiteren Kubus, der zur Berechnung des des Farb- bzw. Helligkeitswerts eines Rasterelements bei Spiegelreflexion dient.

Bei einer spiegelnden Reflexion an einer Fläche erfolgt die Reflexion nicht gleichmäßig in alle Richtungen, wie bei der vorstehend beschriebenen diffusen Reflexion angenommen wurde, sondern in einer bevorzugten Lichtausfallsrichtung. Diese Lichtausfallsrichtung ergibt sich nach den Gesetzen der geometrischen Strahlenoptik aus der Lage der Flächennormale und der Lichteinfallsrichtung. Ein von einer Lichtquelle ausgehender Lichtstrahl trifft also auf die Fläche und wird an dieser in Richtung der Lichtausfallsrichtung reflektiert, wobei Einfalls- und Ausfallswinkel gegenüber der Flächennormale gleich sind. Betrachtet man nun umgekehrt nicht den von der Lichtquelle ausgehenden Lichtstrahl, sondern einen von dem Betrachter ausgehenden "Sehstrahl", so wird dieser "Sehstrahl" nach den gleichen Gesetzen an der Fläche reflektiert und trifft schließlich auf ein Objekt der Umgebung. Auf diese Weise läßt sich bestimmen, welchen Ausschnitt der Umgebung ein Betrachter bei der Spiegelreflexion an einem Rasterelement wahrnimmt.

Hierzu wird in Abhängigkeit von der Betrachtungsrichtung E und der Lage der Pixelnormale ein Reflexionsvektor $R_U$ berechnet, der dem an dem Rasterelement reflektierten "Sehstrahl" entspricht. Da bei Spiegelreflexion Einfallsund Ausfallswinkel gleich sind, ergibt sich für den Reflexionsvektor $R_U$ aus der Pixelnormale $N_U$ und dem Betrachtungsvektor E:

$$\vec{R}_U = 2 \cdot \vec{N}_U \cdot (\vec{N}_U \cdot \vec{E}) + \vec{E} \cdot (\vec{N}_U \cdot \vec{N}_U)$$

oder in Komponentenschreibweise:

$$\begin{bmatrix} r_x \\ r_y \\ r_z \end{bmatrix} = 2 \cdot \begin{bmatrix} n_x \\ n_y \\ n_z \end{bmatrix} \cdot \left( n_x \cdot e_x + n_y \cdot e_y + n_z \cdot e_z \right) + \begin{bmatrix} e_x \\ e_y \\ e_z \end{bmatrix} \cdot \left( n_x^2 + n_y^2 + n_z^2 \right)$$

Der Kubus wird - wie bereits bei der Berechnung der diffusen Reflexion - so angeordnet, daß das betrachtete Dreieck 32 im Zentrum des Kubus liegt. Der Kubus bildet also eine das Rasterelement umgebende Hüllfläche, wobei jedem Flächenelement der Hüllfläche ein Farb- bzw. Helligkeitswert zugeordnet ist. Zur Bestimmung des Farb- bzw. Helligkeitswerts muß also das Flächenelement der Hüllfläche bestimmt werden, das von dem Reflexionsvektor $R_U$ oder dessen Verlängerung durchstoßen wird. Der diesem Flächenelement zugeordnete Farb- bzw. Helligkeitswert gibt dann den Bildeindruck des Betrachters wieder.

Die kubische Hüllfläche gibt also eine Rundum-Aufnahme der Umgebung aus der Perspektive des Rasterelements wieder.

Der Kubus wird hierbei - wie bereits bei der diffusen Reflexion - durch eine dreidimensionale Speichermatrix nachgebildet. Die Adressierung der ersten Dimension erfolgt dabei in Abhängigkeit von der von dem Reflexionsfaktor durchstoßenen Seitenfläche. Für den Adreßwert $a_1$ der ersten Dimension der Speichermatrix gilt:

$$a_1 = \begin{cases} 1 & \textit{falls} \quad \max\!\left[r_x, r_y, r_z\right] = r_x > 0 \\ 2 & \textit{falls} \quad \max\!\left[r_x, r_y, r_z\right] = r_x < 0 \\ 3 & \textit{falls} \quad \max\!\left[r_x, r_y, r_z\right] = r_y > 0 \\ 4 & \textit{falls} \quad \max\!\left[r_x, r_y, r_z\right] = r_y < 0 \\ 5 & \textit{falls} \quad \max\!\left[r_x, r_y, r_z\right] = r_z > 0 \\ 6 & \textit{falls} \quad \max\!\left[r_x, r_y, r_z\right] = r_z < 0 \end{cases}$$

Die Adressierung der anderen beiden Dimensionen der Speichermatrix erfolgt in Abhängigkeit von der Lage des Schnittpunkts 31 innerhalb der von dem Reflexionsvektor $R_U$ durchstoßenen Seitenfläche. Für die Adreßwerte $a_2$, $a_3$ gilt:

$$a_2 = \begin{cases} \arctan\!\left(\dfrac{r_y}{|r_x|}\right) & \textit{falls} \quad a_1 = 1 \, oder \, 2 \\[2ex] \arctan\!\left(\dfrac{r_x}{|r_y|}\right) & \textit{falls} \quad a_1 = 3 \, oder \, 4 \\[2ex] \arctan\!\left(\dfrac{r_x}{|r_z|}\right) & \textit{falls} \quad a_1 = 5 \, oder \, 6 \end{cases} \qquad a_3 = \begin{cases} \arctan\!\left(\dfrac{r_z}{|r_x|}\right) & \textit{falls} \quad a_1 = 1 \, oder \, 2 \\[2ex] \arctan\!\left(\dfrac{r_z}{|r_y|}\right) & \textit{falls} \quad a_1 = 3 \, oder \, 4 \\[2ex] \arctan\!\left(\dfrac{r_y}{|r_z|}\right) & \textit{falls} \quad a_1 = 5 \, oder \, 6 \end{cases}$$

In Abhängigkeit von den Adreßwerten $a_1$, $a_2$, $a_3$ wird dann aus der Speichermatrix der Reflexionsfaktor für Spiegelreflexion ausgelesen, der zusammen mit dem Reflexionsfaktor für diffuse Reflexion sowie dem Texturwert des Rasterelements in die Berechnung der Helligkeit des Rasterelements eingeht.

Vorteilhaft ist hierbei, daß die Perspektive des Betrachters verändert werden kann, ohne daß die Speichermatrix neu berechnet werden muß. Der Betrachter kann deshalb in einer Echt-Zeit-Darstellung seine Perspektive relativ zu der darzustellenden räumlichen Szene verändern und somit durch die Szene "hindurchwandern".

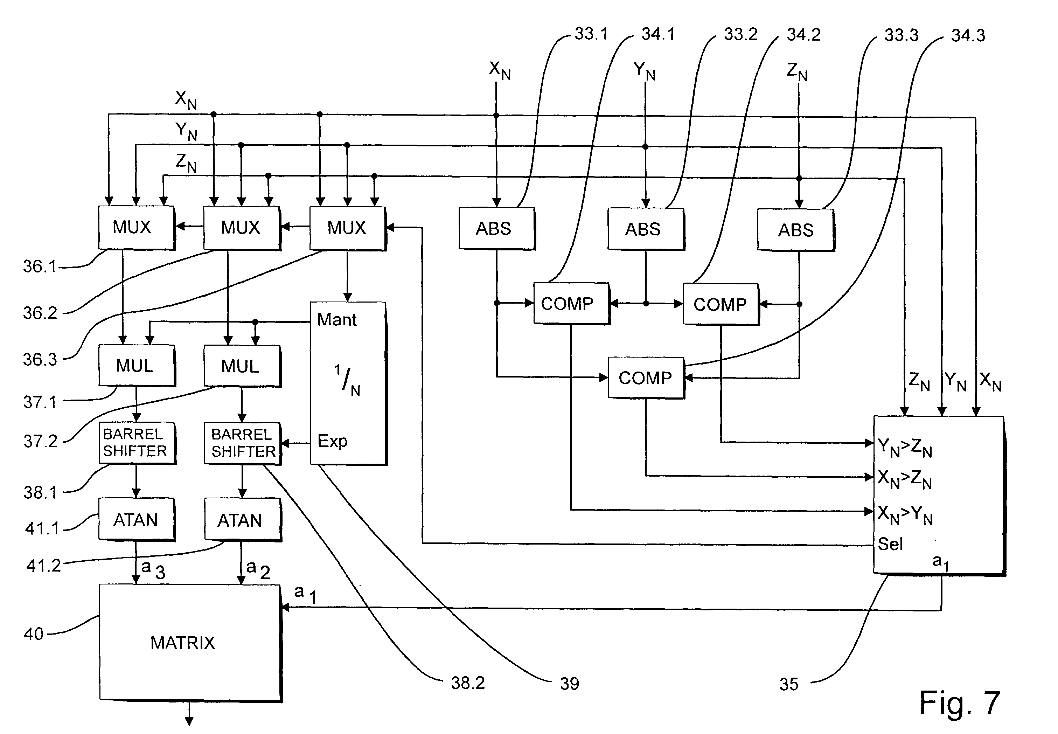

Figur 7 zeigt ein Blockschaltbild einer Schaltung zur Adressierung einer 3-dimensionalen Speichermatrix durch einen Vektor, wobei die 3-dimensionale Matrix eine den Ursprung des Vektors umgebende kubische Hüllfläche nachbildet.

Die dargestellte Schaltung eignet sich also zur Berechnung der Farb- bzw. Helligkeitswerte für diffuse Reflexion oder Spiegelreflexion mit den in Figur 6a bzw. 6b dargestellten Kuben.

Darüber hinaus läßt sich die Schaltung überall dort einsetzen, wo ein Vektor eine 3-dimensionale Speichermatrix adressiert, die eine kubische Hüllfläche nachbildet, also beispielsweise auch in Figur 1 anstelle der Adressierungseinheit 6, der Recheneinheit 9 bzw. 10 und den Matrizen 7 bzw. 8.

Am Eingang nimmt die Schaltung die Raumkoordinaten $x_N$, $y_N$, $z_N$ des adressierenden Vektors auf.

Die Schaltung ermittelt zunächst, welche Seitenfläche der kubischen Hüllfläche der Vektor schneidet. Hierzu wird die betragsmäßig größte Raumkoordinate des adressierenden Vektors bestimmt. Ist beispielsweise die X-Koordinate des Vektors am größten, so schneidet der Vektor die Seitenfläche der kubischen Hüllfläche, die parallel zur YZ-Ebene verläuft.

Die Raumkoordinaten $x_N$, $y_N$, $z_N$ werden deshalb zunächst jeweils einer Recheneinheit 33.1, 33.2 bzw. 33.3 zugeführt, die den Absolutwert der Raumkoordinaten bilden. Anschließend werden die Absolutwerte der Raumkoordinaten - also die Ausgangssignale der Recheneinheiten 33.1, 33.2 und 33.3 - jeweils paarweise drei Komparatoren 34.1, 34.2, 34.3 zugeführt, die die Absolutwerte der Raumkoordinaten vergleichen.

Die Ausgangssignale der Komparatoren 34.1, 34.2, 34.3 werden dann einer Adressierungseinheit 35 zugeführt, die den Adreßwert $a_1$ für die erste Dimension der 3-dimensionalen Matrix 40 berechnet. Hierzu vergleicht die Adressierungseinheit 35 die Ausgangssignale der Komparatoren 34.1, 34.2, 34.3 und errechnet daraus sowie aus den Vorzeichen der Raumkoordinaten den Adreßwert $a_1$ nach folgender Regel:

**15**

$$a_1 = \begin{cases} 1 & \textit{falls } x_N \geq y_N \quad \wedge \quad x_N \geq z_N \quad \wedge \quad x_N \geq 0 \\ 2 & \textit{falls } x_N \geq y_N \quad \wedge \quad x_N \geq z_N \quad \wedge \quad x_N < 0 \\ 3 & \textit{falls } y_N \geq x_N \quad \wedge \quad y_N \geq z_N \quad \wedge \quad y_N \geq 0 \\ 4 & \textit{falls } y_N \geq x_N \quad \wedge \quad y_N \geq z_N \quad \wedge \quad y_N < 0 \\ 5 & \textit{falls } z_N \geq y_N \quad \wedge \quad z_N \geq x_N \quad \wedge \quad z_N \geq 0 \\ 6 & \textit{falls } z_N \geq y_N \quad \wedge \quad z_N \geq x_N \quad \wedge \quad z_N \geq 0 \end{cases}$$

Weiterhin ermittelt die Schaltung, an welcher Position der adressierende Vektor die Seitenfläche der kubischen Hüllfläche durchstößt. Die Koordinaten dieses Schnittpunktes dienen zur Adressierung der zweiten und dritten Dimension der Matrix 40.

Hierzu bildet die Schaltung den Quotienten aus jeweils einer der betragsmäßig kleineren Raumkoordinaten und der betragsmäßig größten Raumkoordinate. Die Adressierungseinheit 35 erzeugt deshalb ein Auswahlsignal Sel, das den Multiplexern 36.1, 36.2, 36.3 zugeführt wird.

Der Multiplexer 36.3 wählt die betragsmäßig größte Raumkoordinate aus und führt deren Wert der Recheneinheit 39 zu, die daraus den Kehrwert bildet und getrennt als Mantisse und Exponent ausgibt.

Die beiden anderen Multiplexer 36.1, 36.2 wählen jeweils eine der beiden betragsmäßig kleineren Raumkoordinaten als Zähler aus.

Die Ausgangssignale der Multiplexer 36.1, 36.2 werden dann zusammen mit der von der Recheneinheit 39 ermittelten Mantisse des Kehrwerts der betragsmäßig größten Raumkoordinate jeweils einem Multiplizierer 37.1, 37.2 zugeführt, der die betragsmäßig kleineren Raumkoordinaten mit der Mantisse des Kehrwerts der betragsmäßig größten Raumkoordinate multipliziert.

Das Ausgangssignal der Multiplizierer 37.1, 37.2 wird zwei Schieberegistern 38.1, 38.2 zugeführt, die eine Multiplikation mit dem von der Recheneinheit 39 berechneten Exponenten durchführen.

Für die Ausgangssignale $a_2$, $a_3$ dieser Adressierungslogik gilt also beispielsweise, falls $x_N$ die betragsmäßig größte Komponente ist:

$$a_2 = \frac{y_N}{x_n} \qquad a_3 = \frac{z_N}{x_N}$$

Die Ausgangssignale $a_2$, $a_3$ adressieren dann die zweite bzw. dritte Dimension der Matrix 40, die beispielsweise als Halbleiterspeicher realisiert ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

**Patentansprüche**

**1.** Bildverarbeitungsverfahren zur Darstellung von Objekten (15, 18), wobei die Objekte (15, 18) insbesondere aus mindestens einer Polygonfläche (30, 32) bestehen,
bei dem für jedes Objekt (15, 18)
mittels einer ersten Baugruppe (2) einer Recheneinheit jeweils aus einem die räumliche Lage der Polygonfläche (30, 32) repräsentierenden vorgegebenen ersten Parametersatz ein die räumliche Lage der Flächennormale repräsentierender zweiter Parametersatz ($n_x$, $n_y$, $n_z$) berechnet wird sowie
mittels einer zweiten Baugruppe (6) der Recheneinheit jeweils aus dem zweiten Parametersatz ($n_x$, $n_y$, $n_z$) und einem die Perspektive des Betrachters repräsentierenden dritten Parametersatz ($e_x$, $e_y$, $e_z$) ein vierter Parametersatz berechnet wird, der die räumliche Lage eines nach der Reflexion an der Polygonfläche (30, 32) den Betrachter erreichenden Lichtstrahls repräsentiert,
**dadurch gekennzeichnet,**
**daß** den Objekten (15, 18) zur Bestimmung des Helligkeitsund/oder Farbeindrucks unter Berücksichtigung von Spiegelungen der Umgebung und anderer Objekte jeweils eine Speichermatrix (7, 8) zugeordnet ist, welche eine das jeweilige Objekt umgebende Hüllfläche (16, 20) repräsentiert und den Helligkeits- und/oder Farbeindruck der Umgebung des Objekts (15, 18) aus dessen Perspektive repräsentierende Bildinformationswerte ($E_D$, $E_S$) enthält, **daß** zur Auswahl der dem Objekt (15, 18) zugeordneten Speichermatrix (7, 8) mittels einer dritten Baugruppe (14) der Recheneinheit aus dem die räumliche Lage der Polygonfläche (30, 32) repräsentierenden ersten Parametersatz ein Auswahlwert (a) berechnet wird und in Abhängigkeit von dem Auswahlwert (a) eine Speichermatrix (7, 8) selektiert wird,

**daß** die mittels der dritten Baugruppe (14) selektierte Speichermatrix mittels einer Adressierungseinheit (6, 9, 10) durch den vierten Parametersatz adressiert und aus dem adressierten Speicherplatz der den Helligkeits- und/oder Farbeindruck repräsentierende Bildinformationswert ($E_D$, $E_S$) ausgelesen wird.

2. Bildverarbeitungsverfahren nach Anspruch 1, **dadurch gekennzeichnet,**
   **daß** mittels einer vierten Baugruppe (1) aus dem die räumliche Lage der Polygonfläche (30, 32) repräsentierenden ersten Parametersatz eine Vielzahl von Koordinatensätzen (x, y, z) berechnet wird, die die Position jeweils eines Rasterelements der Polygonfläche (30, 32) repräsentieren,
   **daß** der die räumliche Lage der Flächennormale repräsentierenden zweite Parametersatz ($n_x$, $n_y$, $n_z$) für jedes Rasterelement der Polygonfläche (30, 32) aus dem die räumliche Lage der Polygonfläche (30, 32) repräsentierenden ersten Parametersatz und dem Koordinatensatz (x, y, z) des jeweiligen Rasterelements berechnet wird.

3. Bildverarbeitungsverfahren nach Anspruch 2, **dadurch gekennzeichnet,**
   **daß** die Polygonfläche gekrümmt ist und der erste Parametersatz die räumliche Lage der Eckpunktnormalen repräsentiert,
   **daß** der die räumliche Lage der lokalen Flächennormale in einem Rasterelement repräsentierende zweite Parametersatz ($n'_x$, $n'_y$, $n'_z$) jeweils aus dem die räumliche Lage der Eckpunktnormalen der Polygonfläche (30, 32) repräsentierenden ersten Parametersatz und dem Koordinatensatz (x, y, z) des jeweiligen Rasterelements durch Interpolation der Eckpunktnormalen berechnet wird.

4. Bildverarbeitungsverfahren nach Anspruch 2 oder 3, **dadurch gekennzeichnet,**
   **daß** zur Simulation einer Tiefenstruktur der Polygonfläche (30, 32) mittels einer zweiten Adressierungseinheit (3) durch jeden Koordinatensatz (x, y, z) ein Speicherplatz einer zweiten Speichermatrix (5) adressiert und ein die Neigung der lokalen Flächennormale in dem durch den Koordinatensatz (x, y, z) bestimmten Rasterelement gegenüber der Flächennormale der Polygonfläche (30, 32) entsprechend der zu simulierenden Tiefenstruktur repräsentierender Neigungswert (du, dv) aus dem adressierten Speicherplatz der zweiten Speichermatrix (5) ausgelesen wird,
   **daß** der die räumliche Lage der lokalen Flächennormale repräsentierenden zweite Parametersatz ($n'_x$, $n'_y$, $n'_z$) für jeden Koordinatensatz (x, y, z) jeweils aus dem die räumliche Lage der Polygonfläche (30, 32) repräsentierenden ersten Parametersatz und dem Neigungswert (du, dv) berechnet wird.

5. Bildverarbeitungsverfahren nach Anspruch 4, **dadurch gekennzeichnet, daß** der Neigungswert (du, dv) zur Skalierung der Tiefenstruktur vor der Berechnung des die räumliche Lage der lokalen Flächennormale repräsentierenden zweiten Paramatersatzes ($n'_x$, $n'_y$, $n'_z$) mittels eines Multiplizierers mit einem vorgegebenen Skalierungsfaktor multipliziert wird.

6. Bildverarbeitungsverfahren nach einem der Ansprüche 2 bis 5, **dadurch gekennzeichnet,**
   **daß** zur Simulation einer Textur der Polygonfläche (30, 32) mittels einer dritten Adressierungseinheit (3) für jedes Rasterelement der Polygonfläche (30, 32) durch den zugehörigen Koordinatensatz (x, y, z) ein Speicherplatz einer dritten Speichermatrix (5) adressiert und ein Texturwert ausgelesen wird,
   **daß** der aus der dritten Speichermatrix (5) ausgelesene Texturwert zur Simulation einer nur teilweise spiegelnden Polygonfläche (30, 32) mittels einer Mischvorrichtung (11) mit dem aus der ersten Speichermatrix (7, 8) ausgelesenen Bildinformationswert ($E_S$, $E_D$) gemischt wird.

7. Bildverarbeitungsverfahren nach einem der vorhergehenden Ansprüche, **dadurch gekennzeichnet,**
   **daß** jedem Objekt (15, 18) mehrere Speichermatrizen zugeordnet sind, die jeweils eine das Objekt umgebende Hüllfläche repräsentieren und eine Momentaufnahme des Helligkeitsund/oder Farbeindrucks der Umgebung des Objekts (15, 18) aus dessen Perspektive repräsentierende Bildinformationen enthalten,
   **daß** zur Erzeugung eines Bewegungseindrucks mittels einer Auswahleinheit nacheinander jeweils eine der Speichermatrizen ausgewählt und zur Adressierung durch den vierten Parametersatz mit der Adressierungseinheit (6, 9, 10) verbunden wird.

8. Bildverarbeitungsverfahren nach einem der vorhergehenden Ansprüche, **dadurch gekennzeichnet, daß** die Polygonfläche (30, 32) dreieckig ist.

9. Bildverarbeitungsvorrichtung zur Durchführung des Verfahrens nach einem der vorhergehenden Ansprüche, mit einem Eingang zur Aufnahme eines die räumliche Lage der Polygonfläche (30, 32) repräsentierenden ersten Parametersatzes,
einer Recheneinheit mit

- einer ersten Baugruppe (2) zur Berechnung eines die räumliche Lage der Flächennormale der Polygonfläche (30, 32) repräsentierenden zweiten Parametersatzes ($n_x$, $n_y$, $n_z$) aus dem die räumliche Lage der Polygonfläche (30, 32) repräsentierenden ersten Parametersatz,

- einer zweiten Baugruppe (6) zur Berechnung eines die räumliche Lage eines an der Polygonfläche (30, 32) reflektierten und den Betrachter erreichenden Lichtstrahls repräsentierenden vierten Parametersatzes aus dem die Lage der Flächennormale repräsentierenden zweiten Parametersatz ($n'_x$, $n'_y$, $n'_z$) und einem vorgegebenen, die Perspektive des Betrachters repräsentierenden dritten Parametersatz ($e_x$, $e_y$, $e_z$),

**dadurch gekennzeichnet**
**daß** den Objekten (15, 18) zur Bestimmung des Helligkeitsund/oder Farbeindrucks unter Berücksichtigung der Spiegelungen in anderen Objekten jeweils eine Speichermatrix (7, 8) zugeordnet ist, welche eine das jeweilige Objekt (15, 18) umgebende Hüllfläche (16, 20) repräsentiert und den Helligkeits- und/oder Farbeindruck repräsentierende Bildinformationswerte ($E_S$, $E_D$) enthält,
**daß** zur Auswahl der dem jeweiligen Objekt (15, 18) zugeordneten Speichermatrix (7, 8) eine dritte Baugruppe (14) vorgesehen ist, die in Abhängigkeit von dem die räumliche Lage der Polygonfläche (30, 32) repräsentierenden ersten Parametersatz einen Auswahlwert (a) berechnet und in Abhängigkeit von dem Auswahlwert (a) eine Speichermatrix (7, 8) selektiert,
**daß** zur Adressierung eines Speicherplatzes des von der dritten Baugruppe (14) selektierten Speichermatrix (7, 8) in Abhängigkeit von dem vierten Parametersatz eine Adressierungseinheit (6, 9, 10) vorgesehen ist.

10. Bildverarbeitungsvorrichtung nach Anspruch 9, **dadurch gekennzeichnet, daß** jedem Objekt (15, 18) jeweils eine Speichermatrix (8) zur Berechnung der Spiegelreflexion und eine Speichermatrix (7) zur Berechnung der diffusen Reflexion an der Polygonfläche (30, 32) zugeordnet ist, wobei die Speichermatrizen (7, 8) jeweils eine das Objekt (15, 18) umgebende Hüllfläche nachbilden und jeder Speicherplatz der Speichermatrizen jeweils einen Bildinformationswert enthält, der den Bildeindruck der Umgebung des Objekts (15, 18) aus dessen Perspektive wiedergibt.

11. Bildverarbeitungsvorrichtung nach Anspruch 9 oder 10, **dadurch gekennzeichnet, daß** zur Berechnung einer Vielzahl von die Position jeweils eines Rasterelements der Polygonfläche repräsentierenden Koordinatensätzen (x, y, z) eine vierte Baugruppe vorgesehen ist.

12. Bildverarbeitungsvorrichtung nach Anspruch 11, **dadurch gekennzeichnet,**
**daß** zur Simulation einer Tiefenstruktur der Polygonfläche (30, 32) eine zweite Speichermatrix (5) vorgesehen ist, wobei jeder Speicherplatz der zweiten Speichermatrix (5) einem Rasterelement der Polygonfläche zugeordnet ist und einen Neigungswert (du, dv) enthält, der die Neigung der lokalen Flächennormale entsprechend dem Oberflächenverlauf der zu simulierenden Tiefenstruktur definiert,
**daß** zur Adressierung der zweiten Speichermatrix (5) durch die Koordinatensätze (x, y, z) der einzelnen Rasterelemente eine zweite Adressierungseinheit (3) vorgesehen ist.

13. Bildverarbeitungsvorrichtung nach Anspruch 12, **dadurch gekennzeichnet, daß** der zur Simulation einer Tiefenstruktur dienenden zweiten Speichermatrix zur Skalierung der Tiefenstruktur eine Multiplizierer nachgeschaltet ist.

14. Bildverarbeitungsvorrichtung nach einem der Ansprüche 11 bis 13, **dadurch gekennzeichnet,**
**daß** zur Simulation einer Textur der Polygonfläche (30, 32) eine dritte Speichermatrix (5) vorgesehen ist, wobei jeder Speicherplatz der dritten Speichermatrix (5) einem Rasterelement der Polygonfläche zugeordnet ist und einen Texturwert (t) entsprechend dem zu simulierenden Texturbild enthält,
**daß** zur Adressierung der dritten Speichermatrix (5) durch die Koordinatensätze (x, y, z) der einzelnen Rasterelemente eine dritte Adressierungseinheit (3) vorgesehen ist.

15. Bildverarbeitungsvorrichtung nach Anspruch 14, **dadurch gekennzeichnet, daß** die zur Simulation einer Textur dienende dritte Speichermatrix zur dynamischen Textursimulation mit einem Video- oder Computergrafiksystem verbunden ist.

**16.** Bildverarbeitungsvorrichtung nach Anspruch 14, **dadurch gekennzeichnet,**
**daß** jedem Objekt zur dynamischen Textursimulation mehrere Speichermatrizen zugeordnet sind, die jeweils eine Momentaufnahme des zu simulierenden Texturbildes wiedergebende Farb- und/oder Helligkeitswerte enthalten,
**daß** zur sequentiellen Auswahl jeweils einer der ein Texturbild enthaltenden Speichermatrizen zwecks Erzeugung eines Bewegungseindrucks eine Auswahleinheit vorgesehen ist.

**17.** Vorrichtung nach einem der Ansprüche 9 bis 16, **dadurch gekennzeichnet,**
**daß** jedem Objekt (15, 18) mehrere Speichermatrizen zugeordnet sind, die jeweils eine das Objekt umgebende Hüllfläche repräsentieren und eine Momentaufnahme des Helligkeitsund/oder Farbeindrucks der Umgebung des Objekts (15, 18) aus dessen Perspektive repräsentierende Bildinformationen enthalten,
**daß** zur sequentiellen Auswahl jeweils einer der eine Momentaufnahme der Umgebung enthaltenden Speichermatrizen zwecks Erzeugung eines Bewegungseindrucks eine Auswahleinheit vorgesehen ist.


**Claims**

**1.** An image processing method for displaying objects (15, 18), wherein the objects (15, 18) in particular comprise at least one polygonal face (30, 32),
wherein for each object (15, 18)
there is calculated by means of a first structural group (2) of a computing unit from a respective predetermined first parameter set representing the spatial position of the polygonal face (30, 32) a second parameter set ($n_x$, $n_y$, $n_z$) representing the spatial position of the normal to the face, and
by means of a second structural group (6) of the computing unit there is respectively calculated from the second parameter set ($n_x$, $n_y$, $n_z$) and a third parameter set ($e_x$, $e_y$, $e_z$) representing the perspective of the viewer a fourth parameter set which represents the spatial position of a light beam which reaches the viewer after reflection at the polygonal face (30, 32),
**characterised in that**
associated with the objects (15, 18) for determining the brightness and/or colour impression having regard to reflections of the surroundings and other objects is a respective storage matrix (7, 8) which represents an envelope surface (16, 20) surrounding the respective object and which contains image information values ($E_D$, $E_S$) representing the brightness and/or colour impression of the surroundings of the object (15, 18) from the perspective thereof,
to select the storage matrix (7, 8) associated with the object (15, 18) by means of a third structural group (14) of the computing unit a selection value (a) is calculated from the first parameter set representing the spatial position of the polygonal face (30, 32) and a storage matrix (7, 8) is selected in dependence on the selection value (a), and
the storage matrix selected by means of the third structural group (14) is addressed by means of an addressing unit (6, 9, 10) by the fourth parameter set and the image information value ($E_D$, $E_S$) representing the brightness and/or colour impression is read out of the addressed storage location.

**2.** An image processing method according to claim 1 **characterised in that**
a plurality of co-ordinate sets (x, y, z) which represent the position of a respective raster element of the polygonal face (30, 32) is calculated by means of a fourth structural group (1) from the first parameter set representing the spatial position of the polygonal face (30, 32), and
the second parameter set ($n_x$, $n_y$, $n_z$) representing the spatial position of the normal to the face is calculated for each raster element of the polygonal face (30, 32) from the first parameter set representing the spatial position of the polygonal face (30, 32) and the co-ordinate set (x, y, z) of the respective raster element.

**3.** An image processing method according to claim 2 **characterised in that**
the polygonal face is curved and the first parameter set represents the spatial position of the normals to the corner points, and
the second parameter set ($n'_x$, $n'_y$, $n'_z$) representing the spatial position of the local normal to the face in a raster element is respectively calculated from the first parameter set representing the spatial position of the normals to the corner points of the polygonal face (30, 32) and the co-ordinate set (x, y, z) of the respective raster element by interpolation of the normals to the corner points.

4. An image processing method according to claim 2 or claim 3 **characterised in that**

to simulate a depth structure of the polygonal face (30, 32) a storage location of a second storage matrix (5) is addressed by means of a second addressing unit (3) by each co-ordinate set (x, y, z) and a gradient value (du, dv) representing the gradient of the local normal to the face in the raster element determined by the co-ordinate set (x, y, z) with respect to the normal to the polygonal face (30, 32) correspondingly to the depth structure to be simulated is read out of the addressed storage location of the second storage matrix (5), and

the second parameter set ($n'_x$, $n'_y$, $n'_z$) representing the spatial position of the local normal to the face for each co-ordinate set (x, y, z) is respectively calculated from the first parameter set representing the spatial position of the polygonal face (30, 32) and the gradient value (du, dv).

5. An image processing method according to claim 4 **characterised in that** the gradient value (du, dv) is multiplied by a predetermined scaling factor by means of a multiplier for scaling of the depth structure prior to calculation of the second parameter set ($n'_x$, $n'_y$, $n'_z$) representing the spatial position of the local normal to the face.

6. An image processing method according to one of claims 2 to 5 **characterised in that**

to simulate a texture of the polygonal face (30, 32) a storage location of a third storage matrix (5) is addressed by means of a third addressing unit (3) for each raster element of the polygonal face (30, 32) by the associated co-ordinate set (x, y, z) and a texture value is read out, and

the texture value which is read out of the third storage matrix (5) is mixed with the image information value ($E_S$, $E_D$) read out of the first storage matrix (7, 8) by means of a mixing device (11) for simulation of an only partially reflective polygonal face (30, 32).

7. An image processing method according to one of the preceding claims **characterised in that**

associated with each object (15, 18) are a plurality of storage matrices which each represent a respective envelope surface surrounding the object and contain items of image information representing a snapshot of the brightness and/or colour impression of the surroundings of the object (15, 18) from the perspective thereof, and

to produce a motion impression a respective one of the storage matrices is successively selected by means of a selection unit and connected to the addressing unit (6, 9, 10) for the addressing operation by the fourth parameter set.

8. An image processing method according to one of the preceding claims **characterised in that** the polygonal face (30, 32) is triangular.

9. An image processing apparatus for carrying out the method according to one of the preceding claims, comprising

an input for receiving a first parameter set representing the spatial position of the polygonal face (30, 32),

a computing unit including

- a first structural group (2) for calculating a second parameter set ($n_x$, $n_y$, $n_z$) representing the spatial position of the normal to the polygonal face (30, 32) from the first parameter set representing the spatial position of the polygonal face (30, 32),

- a second structural group (6) for calculating a fourth parameter set representing the spatial position of a light beam which is reflected at the polygonal face (30, 32) and which reaches the viewer from the second parameter set ($n'_x$, $n'_y$, $n'_z$) representing the position of the normal to the face and a predetermined third parameter set ($e_x$, ey, $e_z$) representing the perspective of the viewer,

**characterised in that**

associated with the objects (15, 18) for determining the brightness and/or colour impression having regard to the reflections in other objects is a respective storage matrix (7, 8) which represents an envelope surface (16, 20) surrounding the respective object and which contains image information values ($E_D$, $E_S$) representing the brightness and/or colour impression,

to select the storage matrix (7, 8) associated with the respective object (15, 18) there is provided a third structural group (14) which calculates a selection value (a) in dependence on the first parameter set representing the spatial position of the polygonal face (30, 32) and selects a storage matrix (7, 8) in dependence on the selection value (a), and

there is provided an addressing unit (6, 9, 10) for addressing a storage location of the storage matrix (7, 8) selected by the third structural group (14) in dependence on the fourth parameter set.

10. An image processing apparatus according to claim 9 **characterised in that** associated with each object (15, 18)

**EP 0 789 328 B1**

is a respective storage matrix (8) for calculation of specular reflection and a storage matrix (7) for calculation of diffuse reflection at the polygonal face (30, 32), wherein the storage matrices (7, 8) each simulate a respective envelope surface surrounding the object (15, 18) and each storage location of the storage matrices contains a respective image information value which reproduces the image impression of the surroundings of the object (15, 18) from the perspective thereof.

11. An image processing apparatus according to claim 9 or claim 10 **characterised in that** there is provided a fourth structural group for calculating a plurality of co-ordinate sets (x, y, z) representing the position of a respective raster element of the polygonal face.

12. An image processing apparatus according to claim 11 **characterised in that**
there is provided a second storage matrix (5) for simulation of a depth structure of the polygonal face (30, 32), wherein each storage location of the second storage matrix (5) is associated with a raster element of the polygonal face and includes a gradient value (du, dv) which defines the gradient of the local normal to the face corresponding to the surface configuration of the depth structure to be simulated, and
there is provided a second addressing unit (3) for addressing of the second storage matrix (5) by the co-ordinate sets (x, y, z) of the individual raster elements.

13. An image processing apparatus according to claim 12 **characterised in that** a multiplier is connected downstream of the second storage matrix serving for simulation of a depth structure for scaling of the depth structure.

14. An image processing apparatus according to one of claims 11 to 13 **characterised in that**
there is provided a third storage matrix (5) for simulation of a texture of the polygonal face (30, 32), wherein each storage location of the third storage matrix (5) is associated with a raster element of the polygonal face and includes a texture value (t) corresponding to the texture image to be simulated, and
there is provided a third addressing unit (3) for addressing of the third storage matrix (5) by the co-ordinate sets (x, y, z) of the individual raster elements.

15. An image processing apparatus according to claim 14 **characterised in that** the third storage matrix serving for simulation of a texture is connected for dynamic texture simulation to a video or computer graphics system.

16. An image processing apparatus according to claim 14 **characterised in that**
associated with each object for dynamic texture simulation are a plurality of storage matrices which each contain a respective snapshot of the colour and/or brightness values reproducing the texture image to be simulated, and
there is provided a selection unit for sequential selection of a respective one of the storage matrices containing a texture image for the purposes of producing an impression of motion.

17. Apparatus according to one of claims 9 to 16 **characterised in that**
associated with each object (15, 18) are a plurality of storage matrices which respectively represent an envelope surface surrounding the object and contain items of image information representing a snapshot of the brightness and/or colour impression of the surroundings of the object (15, 18) from the perspective thereof, and
there is provided a selection unit for sequential selection of a respective one of the storage matrices containing a snapshot of the surroundings.

**Revendications**

1. Procédé de traitement d'image en vue de la représentation d'objets (15, 18), les objets (15, 18) se composant en particulier d'au moins une surface polygonale (30, 32),
selon lequel pour chaque objet (15, 18)
au moyen d'un premier ensemble (2) d'une unité de calcul à partir d'un premier jeu de paramètres prédéterminé représentant la position spatiale de la surface polygonale (30, 32) est calculé un second jeu de paramètres $(n_x, n_y, n_z)$ représentant la position spatiale de la normale à la surface
ainsi qu'au moyen d'un second ensemble (6) de l'unité de calcul à partir du second jeu de paramètres $(n_x, n_y, n_z)$ et à partir d'un troisième jeu de paramètres $(e_x, e_y, e_z)$ représentant la perspective de l'observateur est calculé un quatrième jeu de paramètres, qui représente la position spatiale d'un rayon lumineux atteignant l'observateur après la réflexion sur la surface polygonale (30, 32),

21

**caractérisé**

**en ce qu'**aux objets (15, 18) en vue de la détermination de l'impression de luminosité et/ou de couleur en tenant compte de réflexions de l'environnement et d'autres objets, est associée une matrice de mémoire (7, 8), qui représente une surface enveloppe (16, 20) entourant l'objet respectif et qui contient l'impression de luminosité et/ou de couleur de l'environnement de l'objet (15, 18) à partir de valeurs d'information d'image ($E_D$, $E_S$) représentant la perspective de celui-ci,

**en ce qu'**en vue du choix de la matrice de mémoire (7, 8) associée à l'objet (15, 18) au moyen d'un troisième ensemble (14) de l'unité de calcul est calculée, à partir du premier jeu de paramètres représentant la position spatiale de la surface polygonale (30, 32), une valeur de sélection (a) et en fonction de la valeur de sélection (a) une matrice de mémoire (7, 8) est sélectionnée,

**en ce que** la matrice de mémoire sélectionnée au moyen du troisième ensemble (14) est adressée au moyen d'une unité d'adressage (6, 9, 10) par le quatrième jeu de paramètres et à partir de l'emplacement de mémoire adressé est sélectionnée la valeur d'information d'image ($E_D$, $E_S$) représentant l'impression de luminosité et/ou de couleur.

2.  Procédé de traitement d'image selon la revendication 1, **caractérisé**

**en ce qu'**au moyen d'un quatrième ensemble (1) à partir du premier jeu de paramètres représentant la position spatiale de la surface polygonale (30, 32) est calculée une pluralité d'ensembles de coordonnées (x, y, z) qui représentent la position respectivement d'un élément de trame de la surface polygonale (30, 32),

**en ce que** le second jeu de paramètres ($n_x$, $n_y$, $n_z$) représentant la position spatiale de la normale à la surface pour chaque élément de trame de la surface polygonale (30, 32) est calculé à partir du premier jeu de paramètres représentant la position spatiale de la surface polygonale (30, 32) et de l'ensemble de coordonnées (x, y, z) de l'élément de trame respectif.

3.  Procédé de traitement d'image selon la revendication 2, **caractérisé**

**en ce que** la surface polygonale est courbée et le premier jeu de paramètres représente la position spatiale des normales aux points angulaires,

**en ce que** le deuxième jeu de paramètres ($n'_x$, $n'_y$, $n'_z$), représentant la position spatiale de la normale locale à la surface dans un élément de trame, est calculé par interpolation des normales aux points angulaires à partir du premier jeu de paramètres représentant la position spatiale des normales aux points angulaires de la surface polygonale (30, 32) et de l'ensemble de coordonnées (x, y, z) de l'élément de trame respectif.

4.  Procédé de traitement d'image selon la revendication 2 ou 3, **caractérisé**

**en ce qu'**en vue de la simulation d'une structure profonde de la surface polygonale (30, 32), un emplacement de mémoire d'une seconde matrice de mémoire (5) est adressé au moyen d'une seconde unité d'adressage (3) par chaque ensemble de coordonnées (x, y, z) et une valeur d'inclinaison (du, dv), représentant l'inclinaison de la normale locale à la surface dans l'élément de trame déterminé par l'ensemble de cordonnées (x, y, z) par rapport à la normale de la surface polygonale (30, 32) correspondant à la structure profonde à simuler, est sélectionnée à partir de l'emplacement de mémoire adressé de la seconde matrice de mémoire (5),

**en ce que** le second jeu de paramètres ($n'_x$, $n'_y$, $n'_z$), représentant la position spatiale de la normale locale à la surface pour chaque ensemble de coordonnées (x, y, z), est calculé à partir du premier jeu de paramètres représentant la position spatiale de la surface polygonale (30, 32) et de la valeur d'inclinaison (du, dv).

5.  Procédé de traitement d'image selon la revendication 4, **caractérisé en ce que** la valeur d'inclinaison (du, dv) en vue du changement d'échelle de la structure profonde est multipliée avant le calcul du second jeu de paramètres ($n'_x$, $n'_y$, $n'_z$) représentant la position spatiale de la normale locale à la surface au moyen d'un multiplicateur par un coefficient de changement d'échelle prédéterminé.

6.  Procédé de traitement d'image selon une des revendications 2 à 5, **caractérisé**

**en ce qu'**en vue de la simulation d'une texture de la surface polygonale (30, 32) au moyen d'une troisième unité d'adressage (3) pour chaque élément de trame de la surface polygonale (30, 32) par l'ensemble de coordonnées associé (x, y, z), un emplacement de mémoire d'une troisième matrice de mémoire (5) est adressé et une valeur de texture sélectionnée,

**en ce que** la valeur de texture sélectionnée à partir de la troisième matrice de mémoire (5) en vue de la simulation d'une surface polygonale (30, 32) seulement réfléchissante partiellement est mélangée à l'aide d'un dispositif de mélange (11) avec la valeur d'information d'image ($E_S$, $E_D$) sélectionnée à partir de la première matrice de mémoire (7, 8).

7. Procédé de traitement d'image selon une des revendications précédentes, **caractérisé**

**en ce qu'**à chaque objet (15, 18) sont associées plusieurs matrices de mémoire, qui représentent respectivement une surface enveloppe entourant l'objet et contiennent un instantané de l'impression de luminosité et/ou de couleur de l'environnement de l'objet (15, 18) à partir d'informations d'image représentant la perspective de celle-ci,

**en ce qu'**en vue de la génération d'une impression de mouvement au moyen d'un unité de sélection est sélectionnée en succession une des matrices de mémoire et est reliée en vue de l'adressage par le quatrième jeu de paramètres à l'unité d'adressage (6, 9, 10).

8. Procédé de traitement d'image selon une des revendications précédentes, **caractérisé en ce que** la surface polygonale (30, 32) est triangulaire.

9. Dispositif de traitement d'image en vue de la mise en oeuvre du procédé selon une des revendications précédentes, comprenant une entrée en vue de la réception d'un premier jeu de paramètres représentant la position spatiale de la surface polygonale (30, 32),

une unité de calcul comportant

- un premier ensemble (2) en vue du calcul d'un second jeu de paramètres ($n_x$, $n_y$, $n_z$) représentant la position spatiale de la normale à la surface polygonale (30, 32) à partir du premier jeu de paramètres représentant la position spatiale de la surface polygonale (30, 32),
- un second ensemble (6) en vue du calcul d'un quatrième jeu de paramètres représentant la position spatiale d'un rayon lumineux réfléchi sur la surface polygonale (30, 32) et atteignant l'observateur à partir du second jeu de paramètres ($n'_x$, $n'_y$, $n'_z$) représentant la position de la normale à la surface et d'un troisième jeu de paramètres ($e_x$, $e_y$, $e_z$) prédéterminé, représentant la perspective de l'observateur,

**caractérisé**

**en ce qu'**aux objets (15, 18) est associée, en vue de la détermination de l'impression de luminosité et/ou de couleur en tenant compte des réflexions sur d'autres objets, une matrice de mémoire (7, 8), qui représente la surface enveloppe (16, 20) entourant l'objet respectif (15, 18) et contient les valeurs d'information d'image ($E_S$, $E_D$) représentant l'impression de luminosité et/ou de couleur,

**en ce qu'**en vue de la sélection de la matrice de mémoire (7, 8) associée à l'objet respectif (15, 18), est prévu un troisième ensemble (14), qui calcule une valeur de sélection (a) en fonction du premier jeu de paramètres représentant la position spatiale de la surface polygonale (30, 32) et sélectionne une matrice de mémoire (7, 8) en fonction de la valeur de sélection (a),

**en ce qu'**en vue de l'adressage de l'emplacement de mémoire de la matrice de mémoire (7, 8) sélectionnée par le troisième ensemble (14) en fonction du quatrième jeu de paramètres, est prévue une unité d'adressage (6, 9, 10).

10. Dispositif de traitement d'image selon la revendication 9, **caractérisé en ce qu'**à chaque objet (15, 18) est associée respectivement une matrice de mémoire (8) en vue du calcul de la réflexion spéculaire et une matrice de mémoire (7) en vue du calcul de la réflexion diffuse sur la surface polygonale (30, 32), des matrice de mémoire (7, 8) simulant respectivement une surface enveloppe entourant l'objet (15, 18) et chaque emplacement de mémoire des matrices de mémoire contient respectivement une valeur d'information d'image, qui restitue l'impression d'image de l'environnement de l'objet (15, 18) à partir de la perspective de celui-ci.

11. Dispositif de traitement d'image selon la revendication 9 ou 10, **caractérisé en ce qu'**en vue du calcul d'une pluralité d'ensembles de coordonnées (x, y, z) représentant la position respective d'un élément de trame de la surface polygonale, est prévu un quatrième ensemble.

12. Dispositif de traitement d'image selon la revendication 11, **caractérisé**

**en ce qu'**en vue de la simulation d'une structure profonde de la surface polygonale (30, 32) est prévue une seconde matrice de mémoire (5), à chaque emplacement de mémoire de la seconde matrice de mémoire (5) étant associé un élément de trame de la surface polygonale et contient une valeur d'inclinaison (du, dv) qui définit l'inclinaison de la normale locale à la surface correspondant à l'allure de la surface de la structure profonde assimilée,

**en ce qu'**en vue de l'adressage de la seconde matrice de mémoire (5) par les ensembles de coordonnées (x, y, z) des différents éléments de trame, est prévue une seconde unité d'adressage (3).

**13.** Dispositif de traitement d'image selon la revendication 12, **caractérisé en ce qu'**en aval de la seconde matrice de mémoire servant à la simulation d'une structure profonde, en vue du changement d'échelle de la structure profonde est disposé un multiplicateur.

**14.** Dispositif de traitement d'image selon une des revendications 11 à 13, **caractérisé**

**en ce qu'**en vue de la simulation d'une texture de la surface polygonale (30, 32), est prévue une troisième matrice de mémoire (5), à chaque emplacement de mémoire de la troisième matrice de mémoire (5) étant associé un élément de trame de la surface polygonale et contenant une valeur de texture (t) correspondant à l'image de texture à simuler,

**en ce qu'**en vue de l'adressage de la troisième matrice de mémoire (5) par les ensembles de coordonnées (x, y, z) des différents éléments de trame, est prévue une troisième unité d'adressage (3).

**15.** Dispositif de traitement d'image selon la revendication 14, **caractérisé en ce que** la troisième matrice de mémoire servant à la simulation d'une texture en vue de la simulation dynamique de texture est reliée à un système vidéo ou graphique de calculateur.

**16.** Dispositif de traitement d'image selon la revendication 14, **caractérisé**

**en ce qu'**à chaque objet en vue de la simulation dynamique de texture, sont associées plusieurs matrices de mémoire, qui contiennent des valeurs de couleur et/ou de luminosité restituant respectivement un instantané de l'image de texture à simuler,

**en ce qu'**en vue de la sélection séquentielle d'une des matrices de mémoire contenant une image de texture, est prévue une unité de sélection en vue de la génération d'une impression de mouvement.

**17.** Dispositif selon une des revendications 9 à 16, **caractérisé**

**en ce qu'**à chaque objet (15, 18) sont associées plusieurs matrices de mémoire, qui représentent une surface enveloppe entourant l'objet et contiennent un instantané de l'impression de luminosité et/ou de couleur de l'environnement de l'objet (15, 18) à partir d'informations d'image représentant la perspective de celui-ci,

**en ce qu'**en vue de la sélection séquentielle d'une des matrices de mémoire contenant un instantané de l'environnement, est prévue une unité de sélection en vue de la génération d'une impression de mouvement.

EP 0 789 328 B1

Fig.1

EP 0 789 328 B1

Fig. 2b

Fig. 2a

26

Fig.3

Fig.4

Fig.5a

Fig.5b

Fig.6a

Fig.6b

Fig. 7

EP 0 789 328 B1